# EUROPÄISCHE PATENTSCHRIFT

(11) **EP 3 339 928 B1**
(45) Veröffentlichungstag und Bekanntmachung des Hinweises auf die Patenterteilung: **24.03.2021**
(21) Anmeldenummer: 17208537.5
(22) Anmeldetag: 19.12.2017
(51) Int. Cl.: G02B 6/44, G02B 6/42

(54) **ANSCHLUSSEINRICHTUNG UND GLASFASERVERTEILERKASTEN**
CONNECTING DEVICE AND OPTICAL FIBRE DISTRIBUTION BOX
DISPOSITIF DE CONNEXION ET BOÎTE DE DISTRIBUTION DE FIBRES OPTIQUES

(30) Priorität: 23.12.2016 DE 102016125610
(43) Veröffentlichungstag der Anmeldung: 27.06.2018
(73) Patentinhaber: gabo Systemtechnik GmbH, 94559 Niederwinkling (DE)
(72) Erfinder: Geiger, Alexander, 94559 Niederwinkling (DE); Karl, Markus, 94327 Bogen (DE); Lederer, Roland, 94374 Schwarzach (DE)
(74) Vertreter: Schmid, Nils T.F.

(56) Entgegenhaltungen:
- EP-A1- 2 439 572
- EP-A1- 2 770 358
- DE-U1-202005 021 740
- US-A- 5 675 124
- US-B1- 7 418 186

## Beschreibung

Die Erfindung betrifft eine Einrichtung zum insbesondere fluiddichten Anschließen eines oder mehrerer Glasfaserkabel aufnehmender Kunststoff-Mikrorohre an einen Glasfaserverteilerkasten und einen Glasfaserverteilerkasten in dem diese Einrichtung lösbar eingesetzt ist.

Der erfindungsgemäße Glasfaserverteilerkasten kann als Datensignalübertragungseinheit verstanden werden, wie sie beispielsweise in der Telekommunikationstechnik, Datenmanagementtechnik, etc. eingesetzt werden soll. Im Besonderen betrifft die Erfindung Glasfaserverteilermodule oder -kästen, die in der Netzwerkebene 3 für den Straßenverteiler oder der Netzwerkebene 4 für den Hausverteiler eingesetzt werden soll. In den letzten Jahren gab es eine deutliche Entwicklung von Schutzrohren für Glasfaserkabel, welche unterirdisch bis zu einer Hauseinheit oder einem straßenseitigen Verteilerkasten verlegt werden. Diese Schutzrohre sind eigenstabil und bewahren ihre kreiszylindrische Form selbst bei hohen Drucklasten auf dem Mikrorohr. Insofern unterscheiden sich die Schutzrohre deutlich von schlauchförmigen und flexiblen Umhüllungen.

Ein Glasfaserverteilerkasten auf dem Gebiet der Telekommunikationstechnik ist aus US 9,075,220 B2 bekannt, bei dem ein Anschluss eines Schutzrohrs für Glasfaserkabel mit einem an dem Ende jedes Schutzrohrs anzubringenden, rohrindividuellen Anschlusskopfstück realisiert ist, das in formkomplementäre Einlegekanäle in einem Montageblock quer zur axialen Längsrichtung des Schutzrohres eingesetzt wird. Zum Befestigen der Einlegekanäle wird je eine das Schutzrohrende umgreifende Hülse eingesetzt. Bei diesem Konzept der Anbindung von Schutzrohren für Glasfaserkabel ist kein Schutz gegen das Eindringen von Feuchtigkeit, insbesondere Spritzwasser, vorgesehen. Außerdem zeigte es sich von Nachteil, dass der Verteilerkasten nicht ohne weiteres auf unterschiedliche Rohrdurchmesser anpassbar ist. Bei unterschiedlich dimensionierten Schutzrohren muss der gesamte Montageblock ausgetauscht werden.

Zudem ist der Produktionsaufwand für die Anschlusselemente aufgrund der Hinzufügung von rohrindividuellen Anschlusskopfstücken an dem Ende des Schutzrohres notwendig.

EP 1 316 829 A2 offenbart einen Glasfaserverteilerkasten als Netzwerkanschlussstelle, bei dem ein Verteilungskabel mittels einer Deckel-Basis-Verklemmung befestigt wird. Die Befestigung soll auch der Abdichtung dienen. Allerdings hat sich herausgestellt, dass die Verklemmung in einigen keinen guten Schutz gegen das Eindringen von Feuchtigkeit, insbesondere Spritzwasser, bietet. Mit dieser Ausgestaltung dürfen hohe Zugkräfte von dem Kabelanschluss nicht aufgenommen werden, weil ansonsten die Gefahr besteht, dass von ungeübtem Bedienpersonal die Verteilungskabel und damit die Glasfaserleitungen beschädigt werden können.

EP 2 770 358 A1 beschreibt eine einstückige Dichtungseinrichtung zum Abdichten eines Glasfaserkabels gegen Eindringen von Fluid. Die Dichtungseinrichtung weist eine Durchgangsbohrung auf, wobei die Durchgangsbohrung mindestens zwei Abschnitte mit unterschiedlichen Durchmessern aufweist. Die erste Bohrung hat einen Durchmesser, der geringfügig kleiner als ein Außendurchmesser des Rohrs ist, um eine mechanische Wechselwirkung der Wand der ersten Bohrung mit der Rohraußenwand zu erzeugen, wenn das Rohr in die erste Bohrung eingeführt wird. Die erste Bohrung stößt mit einer ringförmigen Schulter gegen das Ende des Rohrs an, wenn dieses vollständig in die erste Bohrung eingeführt ist. Die zweite Bohrung weist in dem zweiten Abschnitt der Dichtungseinrichtung einen Innendurchmesser auf, der geringfügig kleiner als ein Außendurchmesser der in dem Rohr untergebrachten Glasfaserkabel ist, um eine mechanische Wechselwirkung der Wand der zweiten Bohrung mit dem Glasfaserkabel zu erzeugen, wenn das Glasfaserkabel in die erste Bohrung eingeführt wird. Das Glasfaserkabel wird fest (durch Reibung) in der Dichtungseinrichtung gehalten wird und eine Wasserdichtigkeit ist hergestellt.

Es ist Aufgabe der Erfindung, die Nachteile des Standes der Technik zu überwinden, insbesondere eine flexible Anschlusseinrichtung für einen Glasfaserverteilerkasten bereitzustellen, bei dem einerseits zumindest Spritzdichtungsvoraussetzungen insbesondere gemäß einschlägigen Vorschriften für Glasfaserverteilerkästen erfüllt sind, andererseits eine Feststellung der Rohre mit Zugentlastung bereitgestellt wird, ohne den Fertigungsaufwand für die Anschlusstechnik und den Glasfaserverteilerkasten zu erhöhen, wobei insbesondere die Flexibilität bei Belegung der Anschlüsse im Hinblick auf die Dimensionierung der Mikrorohre besteht oder die Fertigung der Anschlusseinrichtung vereinfacht ist.

Diese Aufgabe wird durch die Merkmale von Anspruch 1 gelöst. Danach ist eine Einrichtung zum insbesondere fluiddichten Anschließen mehrerer Glasfaserkabel aufnehmender Kunststoff-Mikrorohre an einem Glasfaserverteilerkasten vorgesehen. Die Anschlusseinrichtung erlaubt ein lösbares Feststellen und Freigeben der jeweiligen Mikrorohre ohne die Anschlusseinrichtung selbst, Teile davon oder das Mikrorohr verletzen zu müssen. Die Anschlusseinrichtung soll insbesondere einen Flüssigkeitseintritt über die Dichtungsmenge zwischen der Mikrorohraußenseite und der daran anliegenden Anschlussfläche der Anschlusseinrichtung vermeiden. Die mehreren Kunststoff-Mikrorohre, beispielsweise aus einem Thermoplast oder einem Duroplast, sind starre Mikrorohre mit einem Durchmesser zwischen 2 mm und 50 mm, vorzugsweise 3 mm bis 20 mm, insbesondere 6 mm bis 10 mm. Bevorzugte Durchmesser sind 4 mm, 5 mm, 7 mm oder 12 mm. Dabei ist eine Wandstärke von wenigstens 1 mm bis 10 mm, vorzugsweise 1,5 mm bis 5 mm, vorzusehen, um die starre Rohrstruktur zu bilden. Eine plastische flexible Deformation des starren Mikrorohrs ist nicht vorgesehen. Vielmehr sind die Mikrorohre derart starr ausgeführt, dass sie bei einer Druck-und Zugbelastung formstabil und knickfrei insbesondere unter Beibehaltung des kreisförmigen Querschnitts, bleiben. Ein Mikrorohr kann hohe Radialdrücke ertragen, ohne dass eine plastische Deformation einhergeht. Wird das Mikrorohr über der Lastgrenze belastet und plastisch deformiert, so verliert das Mikrorohr seine Schutzwirkung bezüglich der Ertragung von mechanischem Druck und der Bereitstellung einer Fluiddichtung.

Die erfindungsgemäße Anschlusseinrichtung soll dazu dienen, mehrere getrennte Mikrorohre, die jeweils ein oder mehrere Glasfaserkabel ummanteln oder umgeben, über eine einzige Trägerstruktur, an der die mehreren Mikrorohre eingeführt werden, an den Glasfaserverteilerkasten anzuschließen. Der Glasfaserverteilerkasten hat hierzu ein Gehäuse, das an seinen Seitenwänden einen oder mehrere Durchgänge aufweist, über den die jeweiligen von dem Mikrorohr getragenen optischen Glasfasern ins Innere des Glasfaserverteilerkastens gelangen sollen. Im Inneren des Glasfaserverteilerkastens sind Signaldaten be- und verarbeitende Bauelemente enthalten, die die Glasfasersignale weiterverarbeiten und/oder weiterleiten können.

Vorzugsweise sollen über die erfindungsgemäße Anschlusseinrichtung zwei Mikrorohre, drei Mikrorohre, vier Mikrorohre, fünf Mikrorohre, sechs Mikrorohre, acht Mikrorohre, zehn Mikrorohre, zwölf Mikrorohre, etc., anschließbar sein, indem eine einzige Tragestruktur mit entsprechender Anzahl von Durchgangskanälen vorgesehen ist.

Die erfindungsgemäße Anschlusseinrichtung hat einen Tragkörper, der aus einem elastisch verformbaren Gummimaterial gefertigt ist, beispielsweise aus einem Naturkautschuk, wie EPDM, NBR, oder dergleichen, oder einem Elastomermaterial, wie TPE, oder dergleichen. Vorzugsweise hat das Gummimaterial des Tragkörpers eine Shore-Härte zwischen 15 Shore A und 70 Shore A. Besonders bevorzugt hat das Gummimaterial eine Shore-Härte von 40 Shore A. Aufgrund der material- und fertigungsbedingten Toleranzen kann ein Shore-Härte-Toleranzbereich von +/- 20% vorliegen. Der Tragkörper ist vorzugsweise zum Montieren und Demontieren an dem Glasfaserverteilerkasten insbesondere lösbar anbringbar.

Der Tragkörper der erfindungsgemäßen Anschlusseinrichtung hat mehrere Durchgangskanäle zum Aufnehmen je eines Mikrorohres. Die Durchgangskanäle oder Anschlusskanäle sind dazu ausgelegt, insbesondere dimensioniert, jeweils ein Mikrorohr aufzunehmen. Sämtliche Durchgangskanäle eines Tragkörpers können zumindest in einem Montage-Ausgangszustand (vor Belegen des Durchgangskanals mit einem Mikrorohr) im Wesentlichen gleich geformt bzw. räumlich kongruent sein. Jeder Durchgangskanal erstreckt sich quer durch den Tragkörper, um einen Glasfaserzugang zu einem Glasverteilerkasten bereitzustellen.

Die Durchgangskanäle weisen jeweils eine Rohrdichtungsvorrichtung zum Abdichten einer Rohraußenseite des Mikrorohres gegenüber einer Rohraufnahme-Seite des Durchgangskanals auf. Ferner weisen die Durchgangskanäle jeweils eine Kabeldichtungsvorrichtung zum Abdichten eines innerhalb eines Mikrorohres geführten und daraus hervorragenden Kabels, insbesondere eines Glasfaserkabels, gegenüber einer Kabelaufnahme-Innenseite des Durchgangskanals auf. Jeder Durchgangskanal hat also eine erste Dichtungsvorrichtung in Form einer Rohrdichtungsvorrichtung, die eine Abdichtung gegenüber der Mikrorohr-Außenseite bereitstellt und eine zweite, davon unterschiedliche, Dichtungsvorrichtung in Form einer Kabeldichtungsvorrichtung, die eine Abdichtung gegenüber einem Glasfaserkabel bereitstellt. Eine Dichtungsvorrichtung kann beispielsweise an einem Berührkontakt des elastisch verformbaren Gummimaterials gegenüber der Mikrorohraußenseite bzw. der Glasfaser-Außenseite realisiert sein. Die Rohrdichtungsvorrichtung jedes Durchgangskanals kann beispielsweise für ein Abdichten gegenüber ein Mikrorohr mit einem Außendurchmesser von 3 mm, 4 mm, 5 mm, 6 mm, 8 mm, 10 mm, 20 mm, 30 mm, 40 mm oder 50 mm angepasst sein.

Bevorzugt beträgt der Außendurchmesser eines insbesondere jeden abzudichtenden Kabels zwischen 0,2 mm und 10,0 mm, insbesondere etwa 1,0 mm bis 6,5 mm. Alternativ können Kabel einen Außendurchmesser größer als 6,5 mm haben.

Die Durchgangskanäle der erfindungsgemäßen Anschlusseinrichtung sind vorzugsweise schlauchartig mit entlang der Längserstreckung des Durchgangskanals quer durch den Tragkörper vollumfänglichen Durchgangskanal-Innenseiten. Die Rohraufname-Innenseite eines jeden Durchgangskanals umgreift vorzugsweise vollumfänglich ein aufgenommenes Mikrorohr. Die Kabelaufnahme-Innenseite jedes Durchgangskanals umgreift vorzugsweise vollumfänglich ein den Durchgangskanal belegendes Glasfaserkabel. Vorzugsweise ist jeder Durchgangskanal im Querschnitt zylindrisch, wobei der Durchgangskanal entlang seiner Längserstreckung unterschiedliche lichte Weiten von Querschnittsgrößen aufweisen kann.

Die Abdichtwirkung durch die erfindungsgemäße Anschlussvorrichtung genügt vorzugsweise den Anforderungen für Schutz gegen Tropfwasser gemäß IP1, Schutz gegen Sprühwasser gemäß IP3, Schutz gegen Spritzwasser gemäß IP4 oder sogar Schutz gegen starkes Strahlwasser nach IP6 gemäß DIN 60529.

Die Anschlusseinrichtung kann außerdem einen Berührungsschutz gemäß IP 4X, die den Zugang mit einem Draht, IP 5X gegen staubentschädigender Menge oder IP 6X generell gegen Staub, ebenfalls gemäß DIN 60529 gewährleisten. Die Rohrdichtungsvorrichtung ist insbesondere mikrorohrindividuell dimensioniert.

Vorzugsweise weist jeder Durchgangskanal wenigstens einen Rohraufnahmeabschnitt zum Aufnehmen je eines Mikrorohres auf. Im Verlauf der axialen Längserstreckung eines Rohraufnahmeabschnitts kann eine Rohrdichtungsvorrichtung entlang eines Teilabschnitts oder entlang des gesamten Rohraufnahmeabschnitts realisiert sein. Im Verlauf der axialen Längserstreckung eines Kabelaufnahmeabschnitts kann eine Kabeldichtungsvorrichtung entlang eines Teilabschnitts oder entlang des gesamten Kabelaufnahmeabschnitts realisiert sein.

Bei der erfindungsgemäßen Anschlusseinrichtung sind der Tragkörper, die Rohrdichtungsvorrichtungen und die Kabeldichtungsvorrichtungen einstückig gefertigt, insbesondere vulkanisiert. Einstückig: alternativ kann ein Tragkörper beispielsweis aus einem TPE auch einstückig gespritzt, beispielsweise spritzgegossen, sein. Die erfindungsgemäße Anschlusseinrichtung kann folglich auch als Anschlussstück bezeichnet sein. Eine einstückige Herstellung des gesamten Tragkörpers mit darin ausgebildeten Durchgangskanälen, die je eine Rohrdichtungseinrichtung und je eine Kabeldichtungsvorrichtung aufweisen, erlaubt eine besonders kostengünstige Fertigung der Anschlusseinrichtung. Ferner gestaltet sich durch die Einstückigkeit der erfindungsgemäßen Anschlusseinrichtung deren Montage in einem Glasfaserverteilerkasten besonders einfach und ist wenig fehleranfällig, sodass sie auch von ungeübtem Bedienpersonal problemlos durchgeführt werden kann. Durch die Wahl eines elastischen Gummimaterials für den Tragkörper ist das Belegen der Durchgangskanäle, die gleich oder unterschiedlich große Durchmesser entlang ihrer Längserstreckung quer durch den Tragkörper aufweisen können, einfach an unterschiedlich große Mikrorohre anpassbar. Der Monteur braucht keine spezielle Auswahl im Hinblick auf die Wahl der Mikrorohre oder der Anschlusseinrichtung zu treffen, sondern kann eine selbstanpassende Montage vor Ort vornehmen, indem die Flexibilität bzw. Elastizität des Tragkörper-Gummimaterials eine Anpassung der Innenfläche(n) des Tragkörper-Durchgangskanals an den Außendurchmesser des einzusetzenden Mikrorohres und/oder Glasfaserkabels gewährleistet.

Es hat sich überraschenderweise gezeigt, dass ein Tragkörper aus einem Gummimaterial bei einer Shore-Härte zwischen 15 Shore A und 70 Shore A, insbesondere etwa 40 Shore A, besonders gut dazu in der Lage ist, einerseits eine gute Abdichtwirkung durch die Rohrdichtungsvorrichtung und/oder die Kabeldichtungsvorrichtung gegenüber dem Mikrorohr bzw. Glasfaserkabel bereitzustellen und gleichzeitig eine ausreichende Formstabilität des Tragkörpers für ein sicheres Einsetzen und Halten der erfindungsgemäßen Anschlusseinrichtung in einem Glasfaserverteilerkasten vorzugsweise ohne die Verwendung eines Klebers oder Haftvermittlers zwischen dem Material des Glasfaserverteilerkastens und dem Material des Tragkörpers bereitzustellen.

Gemäß der Erfindung weist der Tragkörper koaxial in Verlängerung zu je einem Durchgangskanal je eine, einstückig mit dem Tragkörper gefertigte, beispielsweise vulkanisierte oder gespritzte, Noppe auf. Die Noppe ist an dem Tragkörper gegenüber der Eingangs- bzw. Zugangsöffnung des Durchgangskanals für das Mikrorohr ausgebildet. Entsprechend dem vorgesehenen Montagezustand einer erfindungsgemäßen Anschlussvorrichtung in einem Verteilerkasten kann die Seite des Tragkörpers, welche die Durchgangskanalöffnungen zum Einbringen der Mikrorohre aufweist, als Außenseite bezeichnet sein. Entsprechend kann die im montierten Zustand der Anschlusseinrichtung nach innen in den Verteilerkasten hineinragende Seite des Tragkörpers als Innenseite in Bezug auf den Verteilerkasten bezeichnet werden. Die Innenseite weist die Glasfaseraustrittsöffnungen auf, durch die die Glasfaserkabel aus dem Tragkörper austreten. Die Glasfaseraustrittsöffnungen des Tragkörpers können fertigungsbedingt als eine Öffnung in der Noppe realisiert sein. Indem bei der erfindungsgemäßen Anschlusseinrichtung eine Verlängerung des Durchgangskanals durch eine Noppe hindurch bereitgestellt ist, durch die ein Glasfaserkabel gehalten wird, das von einem Mikrorohr, welches den Durchgangskanal belegt, geführt ist und daraus hervorragt, wird im Eingang des Glasfaserverteilerkastens ein Knickschutz für das Glasfaserkabel bereitgestellt, der eine scharfe Kante mit einhergehender Kerbwirkung am Glasfaserkabel-Ausgang des Tragkörpers vermeidet. Stattdessen kann die vorzugsweise aus einem elastischen verformbaren Gummimaterial, vorzugsweise dem Gummimaterial des Tragkörpers, bestehende Noppen einen stabilisierenden Übergang bereitstellen. Gemäß der Erfindung hat die Anschlusseinrichtung für jeden Durchgangskanal genau eine Noppe. Insbesondere können alle Noppen eines Tragkörpers an derselben Seite (der Innenseite) des Tragkörpers angeordnet sein.

Bei der erfindungsgemäßen Einrichtung zum Anschließen mehrere Mikrorohre an einem Glasfaserverteilerkasten schließt die Noppe in einem Montageausgangszustand den Durchgangskanal fluiddicht ab. Vorzugsweise ist die Noppe durch irreversible Deformierung, beispielsweise durch Abschneiden, Abreißen oder dergleichen, von dem fluddicht abschließenden Montageausgangszustand in einen Glasfaserabdichtzustand bringbar, indem ein Glasfaserkabel durch den Durchgangskanal und zumindest einen Abschnitt der Noppe hindurchragt, wobei vorzugsweise zumindest ein Abschnitt der Noppe eine Kabeldichtungsvorrichtung bereit stellt. In dem Glasfaserabdichtzustand kann die Noppe eine Glasfaserkabel-Austrittsöffnung ausweisen.

Bei einer Weiterbildung einer erfindungsgemäßen Anschlusseinrichtung, die mit der oben beschriebenen kombinierbar ist, bildet die Noppe die Kabelaufnahmeinnenseite aus, welche eine Dichtwirkung gegenüber der Außenseite des Glasfaserkabels realisieren kann. Die Kabelaufnahme-Innenseite, welche durch die Noppe gebildet ist, ist in einem MikrorohrAbdichtzustand bzw. Glasfaser-Abdichtzustand mit dem Glasfaserkabel eines den Durchgangskanal belegenden Mikrorohres derart belegbar, dass zumindest ein Abschnitt, wie ein Noppenhals, ein Noppenrumpf, oder ein Noppenfuß der Noppe die KabelDichtungsvorrichtung realisiert. Der Noppenfuß ist unmittelbar an einen vorzugsweise quaderförmigen oder würfelförmigen Grundkörper des Tragkörpers aus elastisch verformbarem Gummimaterial ausgebildet. Der Noppenfuß erstreckt sich ausgehend von der Innenseite des Tragkörpers. Der Noppenhals bildet den von dem übrigen quaderförmigen Grundtragkörper, insbesondere dem Mikrorohr-Eingang des Durchgangskanals, entfernten Endabschnitt der Noppe, der insbesondere in einem Montageausgangszustand geschlossen ist.

Der Durchgangskanal erstreckt sich bis hinein in die Noppe und endet dort im Montageausgangszustand sackgassenartig, insbesondere sacklochartig. Zwischen dem Noppenfuß und dem Noppenhals kann ein Noppenrumpf gebildet sein.

Gemäß einer bevorzugten Ausführung einer erfindungsgemäßen Anschlusseinrichtung, die mit den vorherigen kombinierbar ist, weist die Noppe zumindest abschnittsweise, insbesondere in einem Halteabschnitt, eine Umfangsweite, insbesondere einen Außendurchmesser, auf, der wenigstens so groß ist wie, vorzugsweise größer ist als, eine lichte Weite, insbesondere einen Innendurchmesser, der Rohraufnahme-Innenseite des Durchgangskanals. Hierbei soll insbesondere auf die größte lichte Weite bzw. den größten Innendurchmesser, beispielsweise in einem größten Rohraufnahmeabschnitt Bezug genommen sein. Dieser Abschnitt der Noppe kann an einem Noppenhalsabschnitt, einem Noppenrumpfabschnitt oder bevorzugt einem Noppenfußabschnitt, wie oben beschrieben, realisiert sein.

Alternativ oder zusätzlich ist die Noppe in zumindest einem Abschnitt, wie insbesondere einem bzw. dem Halteabschnitt, dazu ausgestaltet, von einem Halteglied unter Ausbildung einer radialen Klemm- oder Pressverbindung aufgenommen zu werden. Das Halteglied kann insbesondere ortsfest mit dem Glasfaserverteilerkasten verbunden sein. Ein Halteglied kann beispielsweise als Ringklemme, Manschette, Muffe, Klemmhülse oder dergleichen realisiert sein und/oder bei handelsüblichen Glasfaserverteilerkästen zum Halten eines Mikrorohres vorgesehen sein. Das Halteglied ist vorzugsweise entsprechend dem Mikrorohr-Außendurchmesser, also dem Außendurchmesser eines handelsüblichen Mikrorohres, wie oben beschrieben, bemessen. Ein Halteglied in Form einer Manschette, die beispielsweise von der Firma Corning vertrieben wird, kann C-Ring-förmig gebildet sein. Gut geeignet sind insbesondere die Manschetten BAT-CC8 mit einem Innendurchmesser zum spannungs- bzw. dehnungsentlasteten Halten von Mikrorohren mit einem Durchmesser bis zu 8 mm. Alternativ können beispielsweise für Mikrorohre bis 8 mm oder 12 mm Durchmesser die Corning-Klemmen BAT-CDS, BAT-CAM, BAT-CAL, BAT-CDX oder BAT-CAX verwendet werden (gemäß Corning "Building Access Terminal (BAT)" - Family Spec Sheet 0220_EMEA_BEN, 2015-05-20). Bei einer C-Ring-förmigen Manschette kann an den gegenüberliegenden Enden der Manschette eine Schnappverbindung ausgebildet sein, beispielsweise durch eine Rastnase, die mit einer Rastaussparung in Eingriff bringbar ist. Vorzugsweise ist die Rastnase dazu vorgesehen, mit einer Kevlar®-Schutzumhüllung eines üblichen Glasfaserkabels umwickelt zu werden, um bei geschlossenem Zustand der Manschette durch die Umwicklung mit der Kevlar®-Schutzumhüllung einen Haltedruck auf das Mikrorohr und das darin angeordnete Glasfaserkabel auszuüben.

Vorzugsweise kann die entwicklungsgemäße Anschlusseinrichtung dergestalt weitergebildet sein, dass die Noppe in dem von dem Halteglied aufzunehmenden Abschnitt (dem Halteabschnitt) derart bemessen ist, dass das Ausbilden der Klemm- oder Pressverbindung einen vorzugsweise abdichtenden radialen Klemmeingriff einer Kabelaufnahme-Innenseite des Durchgangskanals, der sich radial innerhalb des Halteabschnitts befindet, gegenüber einem aus einem Mikrorohr hervor ragenden Glasfaserkabel bewirkt. Zu diesem Zweck kann die Bemessung der Noppe in dem Halteabschnitt eine lichte Weite, insbesondere einen Innendurchmesser, eine Umfangsweite, insbesondere einen Außendurchmesser, und/oder eine Wandstärke aufweisen, die derart bemessen ist, dass sie beim Ausbilden der radialen Klemm- oder Pressverbindung zwischen dem Halteglied und dem Halteabschnitt derart verformt wird, dass ein Klemmeingriff mit dem Glasfaserkabel erreicht wird. Dieser Klemmeingriff kann ein relatives Bewegen des Glasfaserkabels zu dem Mikrorohr und/oder dem Tragkörper vermeiden und ist insbesondere so fest, dass eine Dichtwirkung bzw. Dichtvorrichtung bereitgestellt wird.

Gemäß einer bevorzugten Ausführung einer erfindungsgemäßen Anschlusseinrichtung weist jeder Durchgangskanal eine vorzugsweise in Richtung des Verteilerkastens hineinragende, insbesondere kontinuierlich verjüngende, vorzugsweise zumindest abschnittsweise konische und/oder gestufte Innenkontur auf. Bei einem sich kontinuierlich verjüngenden Durchgangskanal liegt die größte lichte Weichte der Innenkontur des Durchgangskanals an der Mikrokanal-Eintrittsöffnung vor und der kleinste Durchmesser bzw. die kleinste lichte Weite der Innenkontur liegt (in dem Mikrorohrabdichtzustand bzw. Glasfaserabdichtzustand) an der Glasfaserkabelaustrittsöffnung bzw. (in einem Montageausgangszustand) an dem zu der Mikrorohr-Eintrittsöffnung entfernten Ende des Durchgangskanals vor. Die sich verjüngende Innenkontur des Durchgangskanals kann durch einen oder mehrere sich konisch verjüngende Abschnitte realisiert sein und/oder einen oder mehrere Abschnitte mit je einer radialen Verjüngungsstufe aufweisen, wobei an einer radialen Verjüngungsstufe sich der Innendurchmesser bzw. die lichte Weite der Innenkontur sprungartig, in einem axialen Verlauf von weniger als 1 mm, 0,5 mm oder 0,1 mm ändert. Es sei klar, dass ein sich kontinuierlich verjüngender Durchgangskanal im Verlauf von der großen Mikrorohr-Eingangsöffnung durch den Tragkörper hindurch zu der kleinen Glasfaser-Austrittsöffnung eine lichte Weite, insbesondere einen Innendurchmesser aufweist, der abschnittsweise gleich groß bleiben und/oder sich abschnittsweise verkleinern kann, vorzugsweise jedoch frei von sich abschnittsweise stufenartig aufweitenden Bereichen ist, in denen die lichte Weite bzw. der Innendurchmesser der Innenkontur wieder größer wird.

Die gegenüberliegenden Seiten des Tragkörpers, zwischen denen sich jeder Durchgangskanal erstreckt, können in Bezug auf den angedachten Montagezustand der Anschlusseinrichtung in einem Verteilerkasten, bezogen auf den Verteilerkasten, als Innenseite oder Außenseite bezeichnet sein, oder, in Bezug auf die angedachte Belegsituation mit einem glasfaserkabelführenden Mikrorohr als Mikrorohr-Eingangsseite, oder schlicht Eingangsseite und Glasfaserkabel-Ausgangsseite oder schlicht Ausgangsseite, bezeichnet sein. Es sei klar, dass die Ausgangsseite in Bezug auf den Glasfaserkabelverteilerkasten die Innenseite bildet und entsprechend die Eingangsseite in Bezug auf die Glasfaserkabelverteiler-Montagesituation die Außenseite realisiert. Die sich verjüngende Innenkontur des Durchgangskanals liegt in einem unverformten Montageausgangszustand des Tragkörpers vor. Wenigstens zwei der mehreren Durchgangskanäle, vorzugsweise sämtliche Durchgangskanäle des Tragkörpers, haben vorzugsweise die gleiche, insbesondere räumlich kongruente Innenkonturen. Alternativ können einzelne, mehrere oder sämtliche Durchgangskanäle unterschiedliche sich verjüngende Konturen aufweisen.

Gemäß einer Weiterbildung einer erfindungsgemäßen Vorrichtung, die wenigstens einen, mehrere oder sämtliche Durchgangskanäle gemäß der oben beschriebenen bevorzugten Ausführungen betreffen kann, hat jeder dieser Durchgangskanäle eine Innenkontur mit wenigstens einem Innenabsatz, der sich vorzugsweise radial nach innen erstreckt, zum Bereitstellen eines axialen Endanschlags für das den Durchgangskanal belegende Mikrorohr. Der eine oder die mehreren Durchgangskanäle können wenigstens zwei unterschiedliche große, vorzugsweise im Wesentlichen zylindrische, insbesondere schlauchartige, Öffnungsquerschnitte aufweisen, die sich im jeweiligen Abschnittsverlauf verjüngen können, sodass ein mit einem Kabel belegtes Mikrorohr ausschließlich durch vorzugsweise translatorisches Einschieben in Axialrichtung des Durchgangskanals und/oder des Mikrorohres in den Durchgangskanal einsetzbar ist. Durch das Bereitstellen eines axialen Endanschlags bzw. das Beschränken der Einbringmöglichkeit für ein Mikrorohr in den Durchgangskanal auf ein lineares Einschieben, oder beides in Kombination, wird gewährleistet, dass eine einfache Montage auch durch ungeübtes Montagepersonal fehlerfrei durchführbar ist. Um eine einfache Montagemöglichkeit für Mikrorohre unterschiedlichen Durchmessers zu gewährleisten, kann der wenigstens eine bzw. jeder Durchgangskanal wenigstens zwei, drei oder vier Innenabsätze aufweisen, die stufenartig hintereinander angeordnet sind, um für eine entsprechende Anzahl unterschiedlich dimensionierter Mikrorohre je einen vordefinierten Endanschlag bereitzustellen. Auf diese Weise wird die Verwendung eines erfindungsgemäßen Tragkörpers für unterschiedliche Mikrorohre gestattet.

Gemäß einer Weiterbildung der Erfindung, die wenigstens einen, zwei oder sämtliche der Durchgangskanäle betreffen kann, weist jeder dieser Durchgangskanäle wenigstens einen Rohraufnahmeabschnitt mit einer Rohraufnahme-Innenseite und wenigstens einen Kabelaufnahmeabschnitt mit einer Kabelaufnahme-Innenseite auf, wobei der Kabelaufnahmeabschnitt, vorzugsweise durchschnittlich und/oder in seinem größten Querschnittsbereich, eine kleinere lichte Weite, insbesondere einen kleineren Innendurchmesser, als der Rohraufnahmeabschnitt, aufweist, vorzugsweise durchschnittlich und/oder an seiner minimalen lichten Weite. An dem Übergang von dem Rohraufnahmeabschnitt zu dem Kabelaufnahmeabschnitt können ein Innenabsatz zum Bereitstellen eines axialen Endanschlags und/oder eine beispielsweise konische Verjüngung vorgesehen sein. In einem fertig montierten Mikrorohrabdichtzustand bzw. Glasfaserabdichtzustand ist der größere Rohraufnahmeabschnitt mit dem Mikrorohr belegt, sodass in diesem Rohraufnahmeabschnitt eine Rohrdichtungsvorrichtung zwischen der Mikrorohraußenseite und der Rohraufnahme-Innenseite in dem bereitgestellt ist. Durch den kleineren Kabelaufnahmeabschnitt ist im fertig montierten Glasfaserabdichtzustand eine Kabeldichtungsvorrichtung durch den Berührkontakt zwischen der Kabelaufnahmeinnenseite und dem Glasfaserkabel bereitgestellt. Indem unterschiedliche Durchgangskanalabschnitte zur Rohraufnahme einerseits und andererseits zur Glasfaserkabelaufnahme vorgesehen sind, sind ein guter Knickschutz und eine stabile Führung für die sehr empfindlichen Glasfaserkabel realisierbar.

Bei einer Weiterbildung einer erfindungsgemäßen Anschlusseinrichtung, die mit den oben beschriebenen Weiterbildungen bzw. bevorzugten Ausführungsformen kombinierbar ist, weist wenigstens einer, vorzugsweise jeder Durchgangskanal, der mehreren Durchgangskanäle weist wenigstens zwei Kabelaufnahme-Abschnitte mit je einer Kabelaufnahme-Innenseite zum Abdichten und Aufnehmen unterschiedlich großer oder unterschiedlich vieler Glasfaserkabel auf, wobei die wenigstens zwei Kabelaufnahmeabschnitte unterschiedliche lichte Weiten, insbesondere unterschiedliche Innendurchmesser, aufweisen.

Bei einer Weiterbildung einer erfindungsgemäßen Anschlusseinrichtung, die mit den oben beschriebenen Weiterbildungen bzw. bevorzugten Ausführungsformen kombinierbar ist, weist wenigstens einer, vorzugsweise jeder Durchgangskanal, der mehreren Durchgangskanäle wenigstens zwei Rohraufnahme-Abschnitte mit je einer Rohraufnahme-Innenseite zum Abdichten und Aufnehmen unterschiedlich großer Mikrorohre auf, wobei die wenigstens zwei Rohraufnahmeabschnitte unterschiedliche lichte Weiten, insbesondere unterschiedliche Innendurchmesser, aufweisen.

Indem bei dem einstückigen Fertigen des Tragkörpers beispielsweise durch Vulkanisieren oder Spritzen, insbesondere Spritzgießen, wenigstens ein Durchgangskanal, wenigstens zwei Durchgangskanäle oder sämtliche Durchgangskanäle mit unterschiedlich großen Kabelaufnahmeabschnitten realisiert werden, die vorzugsweise eine kontinuierliche Verjüngung des Durchgangskanals vom Durchgangskanaleingang zum Durchgangskanalausgang realisieren, ist auf einfache und kostengünstige Weise eine Kompatibilität der Anschlusseinrichtung mit nur einem Tragkörper für unterschiedlichste Mikrorohrdurchmesser bzw. unterschiedlichste Glasfaserkabeldurchmesser oder -mengen erreichbar, wobei eine einfache Montage bei guter Abdichtwirkung gewährleistet ist.

Gemäß einer weiteren bevorzugten Ausführung einer erfindungsgemäßen Anschlusseinrichtung weist wenigstens einer, wenigstens zwei, vorzugsweise alle, der mehreren Durchgangskanäle insbesondere an deren Innenkontur, vorzugsweise an der wenigstens einen Rohraufnahme-Innenseite, eine Rückhaltevorrichtung auf, die bei Betätigung des Mikrorohres in Zugrichtung aus dem Durchgangskanal heraus, bezüglich dem Glasfaserverteilerkasten also nach außen bzw. bezogen auf den Belegungszustand aus der Mikrorohreingangsöffnung heraus, insbesondere widerhakend eine Rückhaltekraft auf das Mikrorohr ausübt. Insbesondere kann der Durchgangskanal vorzugsweise in dem wenigstens einen Rohraufnahmeabschnitt, insbesondere an der wenigstens einen Rohraufnahme-Innenseite, insbesondere mit einem sägegezahnten Innenprofil mit wenigstens einem, zwei, drei, vier, fünf oder mehr sägezahnartigen Halteringen, gerippt sein. Ein sägegezahntes Innenprofil kann insbesondere derart keilförmig sein, dass ein geringer Einschubwiderstand und ein erhöhter Ausziehwiderstand bereitgestellt sind. Die Rippung eines Rohraufnahmeabschnitts bzw. einer Rohraufname-Innenseite kann vollumfänglich oder in einzelne Umfangsabschnitte unterteilt sein. Die Rippung des Rohraufnahmeabschnitts bzw. der Rohraufname-Innenseite kann im Querschnitt dreieckig, viereckig oder mehreckig oder rundlich, beispielsweise tränenförmig oder halbkreisförmig sein. Andere Formen sind denkbar. Die radiale Höhe einer Rippe ist vorzugsweise kleiner als die Hälfte, kleiner als ein Viertel, insbesondere kleiner als ein Zehntel des Innenradius bzw. der halben lichten Weite des Rohraufnahmeabschnitts bzw. der Rohraufnahme-Innenseite in Axialrichtung benachbart zu der Rippe oder den Rippen. Vorzugsweise sind die Rippe bzw. die Rippen einstückig aus demselben Gummimaterial wie der Tragkörper, die Rohrdichtungsvorrichtungen und die Kabeldichtungsvorrichtungen gefertigt. Eine oder mehrere vollständig umlaufende Rippen können in Funktionsunion eine Rohrdichtungsvorrichtung realisieren und im Vergleich zu einer durch die Rohraufnahme-Innenseite gebildete Abdichtung eine verbesserte Dichtwirkung realisieren. Es sei klar, dass eine sich kontinuierlich verjüngende Durchgangskanalinnenkontur nicht als durch kleine Rippen unterbrochen anzusehen ist. Die Rippen unterscheiden sich durch einen im Wesentlichen punktuellen oder linearen Kontakt mit der Mikrorohraußenseite gegenüber dem im Wesentlichen flächigen Kontakt zwischen der Mikrorohraußenseite und der Rohraufnahme-Innenseite des Durchgangskanals.

Bei einer bevorzugten Ausführung der Erfindung ist wenigstens einer, vorzugsweise wenigstens zwei, insbesondere sind alle der mehreren Durchgangskanäle, insbesondere der gesamte Tragkörper, besonders bevorzugt die gesamte Anschlusseinrichtung, frei von Feststelleinrichtungen aus Metall, die bei Betätigung des Mikrorohres in Zugrichtung aus dem Durchgangskanal heraus, beispielsweise widerhakend, eine Rückhaltekraft für das Mikrorohr ausüben. Insbesondere ist der wenigstens eine Durchgangskanal, die wenigstens zwei Durchgangskanäle, die mehreren Durchgangskanäle, insbesondere der Tragkörper, vorzugsweise die gesamte Anschlusseinrichtung frei von jeglichen Metalleinsätzen. Vorzugsweise besteht die Anschlusseinrichtung aus Kunststoffmaterial. Insbesondere besteht die Anschlusseinrichtung aus dem Tragkörper, der aus Gummimaterial bestehen kann. Indem die erfindungsgemäße Anschlusseinrichtung auf Metalleinsätze oder sogar auf andere Materialien als einem Gummimaterial verzichtet, ist eine besonders einfache und kostengünstige Herstellbarkeit gewährleistet.

Eine bevorzugte erfindungsgemäße Einrichtung zum Anschließen mehrerer Mikrorohre an einem Glasfaserverteilerkasten besteht aus dem Tragkörper, wie oben beschrieben, und/oder besteht aus einem Gummimaterial. Bei einer alternativen bevorzugten Ausführung der Erfindung, die mit der vorherigen kombinierbar ist, weist die Anschlusseinrichtung ausschließlich Durchgangsöffnungen für Mikrorohre bzw. Kabelzugänge oder -durchgänge auf, die als Durchgangskanäle realisiert sind. Bei einer solchen Anschlusseinrichtung ist gewährleistet, dass alle Durchgangskanäle, die sich quer durch den Tragkörper von dessen Eingangsseite zu dessen Ausgangsseite erstrecken, als Durchgangskanäle mit den Vorteilen der Erfindung realisiert sind, sodass jede Durchgangsöffnung als Durchgangskanal eine einfache und fehlerfreie Montage unterstützt.

Gemäß einer bevorzugten Ausführung einer erfindungsgemäßen Anschlusseinrichtung ist eine Seitenfläche des Tragkörpers mit einem vorzugsweise rechteckigen, insbesondere quadratischen Montageprofil zum translatorischen Einschieben des Tragkörpers längs einer entsprechend geformten Wandöffnung des Glasfaserverteilerkastens geformt. Die Seitenfläche bzw. Umfangsseite, die zwischen der Eingangsseite und der Ausgangsseite des Tragkörpers gebildet ist, weist insbesondere eine Führungsnut auf, in die ein Wandrand des Glasfaserverteilerkastens gleitend eingreifen kann. Alternativ oder zusätzlich legt das Montageprofil eine Montageeinschieberichtung des Tragkörpers gegenüber dem Glasfaserverteilerkasten derart fest, dass die Montageeinschieberichtung quer, insbesondere senkrecht, zur Durchgangskanallängsrichtung liegt.

Eine bevorzugte Ausführung einer erfindungsgemäßen Einrichtung zum fluiddichten Anschließen mehrere Mikrorohre an einem Glasfaserverteilerkasten umfasst wenigstens ein Mikrorohr, und je ein innerhalb des Mikrorohres geführtes und daraus hervor ragendes Glasfaserkabel, wobei das Mikrorohr mit dem Glasfaserkabel einen der mehreren Durchgangskanäle derart belegt, dass das Mikrorohr vorzugsweise in einem Rohraufnahmeabschnitt und das Glasfaserkabel vorzugsweise innerhalb eines Kabelaufnahmeabschnitts angeordnet ist, wobei der belegte Durchgangskanal eine Abdichtung zwischen einer Rohraußenseite des Mikrorohres gegenüber einer Rohraufnahme-Innenseite und eine Abdichtung zwischen der Außenseite des Glasfaserkabels gegenüber einer Kabelaufnahmeinnenseite des Durchgangskanals aufweist. Vorzugsweise umfasst die Anschlusseinrichtung mehrere Mikrorohre mit je wenigstens einem Glasfaserkabel, wobei jedes Mikrorohr je einen Durchgangskanal belegt. Vorzugsweise sind sämtliche der Durchgangskanäle belegt.

Des Weiteren betrifft die Erfindung einen Glasfaserverteilerkasten mit einem geschlossenen Gehäuse, insbesondere einem fluiddicht abgeschlossenen Gehäuse, das vorzugsweise aus einem Kunststoff gefertigt, insbesondere gespritzt ist. Das Gehäuse hat insbesondere eine quaderblockförmige Außengestalt und wenigstens einen Durchgang in einer Gehäusewand. Es können auch mehrere Durchgänge in der Gehäusewand ausgebildet sein, wobei der Durchgang annähernd durch die gesamte Ausdehnung der Gehäusewand des quaderförmigen Gehäuses ausgebildet sein kann. In dem Durchgang ist die oben beschriebene erfindungsgemäße Einrichtung zum Anschließen von Mikrorohren lösbar eingesetzt, so dass der wenigstens eine Durchgang vollständig durch den Tragkörper ausgefüllt ist und lediglich die Durchgangskanäle vorliegen, die mit Mikrorohren bestückt werden können. Bleibt einer der Durchgangskanäle mikrorohrfrei, verschließt eine Noppe den jeweiligen Kanal.

Es sei klar, dass mehrere Durchgänge in einer oder mehreren der Gehäusewänden eingebracht sein kann, wobei die Tragkörper der erfindungsgemäßen Anschlusseinrichtungen nicht gleich dimensioniert sein müssen.

Mit der Erfindung wird erreicht, eine besonders flexible und einfach zu betätigende Anschlusseinrichtung für den Anschluss von Mikrorohren zu schaffen, die als Schutz für die empfindlichen Glasfaser dienen und üblicherweise mit Glasfasern bestückt werden, damit diese weder durch den Verlegevorgang noch über den verlängerten Zeitraum nicht beschädigt werden. Mikrorohre sind insbesondere von Interesse, als diese zusammen mit den Glasfaserbündeln wie auch mit Einzelglasfasern gemeinsam extrudiert werden können, wodurch eine Mikrorohr-Glasfasergesamtstruktur in einem einzelnen Herstellungsschritt realisiert ist. Für diese Mikrorohre kann der erfindungsgemäße Gegenstand als Standard fungieren, um ein sicheres und schonendes Anschließen auch für ungeübtes Bedienpersonal zu gewährleisten. Zudem erreicht die Erfindung selbst bei bestehenden Glasfaserverteilerkästen, insbesondere deren Gehäusestruktur und bestehenden Gehäusedurchgängen kompatible Anschlussmöglichkeiten zu schaffen, ohne die Gehäusestruktur des bestehenden Glasfaserverteilerkastens verändern zu müssen. Die Erfindung erreicht, dass selbst für unterschiedlichste Mikrorohrabmessungen der gleiche Aufbau für die Anschlusseinrichtungselemente benutzt werden kann, ohne Einbußungen hinsichtlich der Fluiddichtigkeit hinnehmen zu müssen.

Gemäß einer bevorzugten Weiterbildung eines erfindungsgemäßen Glasfaserverteilerkastens sind sämtliche Kabelzugänge zu dem Glasfaserverteilerkasten als Durchgangskanäle in wenigstens einem Tragkörper realisiert. Insbesondere weist der Glasfaserverteilerkasten nur einen einzigen in der Gehäusewand angeordneten Durchgang auf, der mit einer einzigen Anschlusseinrichtung belegt ist, sodass alle Durchgangskanäle für einen Durchgang in den Glasfaserverteilerkasten in einem einzigen Montageschritt an dem Glasfaserverteilerkasten anbringbar sind.

Beispiele für die Kombination von Glasfaserverteilerkästen mit einem jeweiligen Tragkörper gemäß einer erfindungsgemäßen Anschlusseinrichtung sind in den Figuren dargestellt.

Weitere Eigenschaften, Vorteile und Merkmale der Erfindung sind in der folgenden Beschreibung von bevorzugten Ausführungen der Erfindung anhand der beiliegenden Zeichnungen deutlich gemacht, in denen zeigen:
- Fig. 1a: Eine perspektivische Ansicht einer erfindungsgemäßen Anschlusseinrichtung gemäß einer ersten Ausführung mit zwei Durchgangsöffnungen;
- Fig. 1b: eine Frontansicht der erfindungsgemäßen Anschlusseinrichtung gemäß Figur 1a mit Blick auf deren Außenseite bzw. Mikrorohreingangsseite;
- Fig. 1c: eine Seitenansicht auf die erfindungsgemäße Anschlusseinrichtung gemäß Figur 1a;
- Fig. 1d: eine perspektivische Querschnittsansicht der erfindungsgemäßen Anschlusseinrichtung nach Fig. 1a;
- Fig. 2a: eine schematische perspektivische Ansicht eines erfindungsgemäßen Glasfaserverteilerkastens mit einer in einer Durchgangsöffnung des Glasfaserverteilerkastens eingesetzten erfindungsgemäßen Anschlusseinrichtung mit vier Durchgangskanälen, von denen zwei Durchgangskanäle mit je einem Mikrorohr mit Glasfaserkabel bestückt sind;
- Fig. 2b: eine schematische Querschnittansicht des erfindungsgemäßen Glasfaserverteilerkastens und der darin eingesetzten erfindungsgemäßen Anschlusseinrichtung nach Fig. 2a;
- Fig. 3a: eine Frontalsicht auf eine Außenseite bzw. Mikrorohr-Eingangsseite einer erfindungsgemäßen Anschlusseinrichtung gemäß einer dritten Ausführung mit vier Durchgangskanälen;
- Fig. 3b: eine Seitenansicht der erfindungsgemäßen Anschlusseinrichtung gemäß Figur 3a;
- Fig. 3c: eine Querschnittsansicht der Anschlusseinrichtung gemäß Figur 3a;
- Fig. 4a: eine perspektivische Ansicht einer weiteren Ausführung einer erfindungsgemäßen Anschlusseinrichtung mit sechs Durchgangskanälen;
- Fig. 4b: eine andere perspektivische Ansicht des Anschlussstücks gemäß Figur 4a;
- Fig.5a: eine perspektivische Ansicht einer weiteren Ausführung einer erfindungsgemäßen Anschlusseinrichtung mit acht Durchgangskanälen;
- Fig. 5b: eine andere perspektivische Ansicht des Anschlussstücks gemäß Figur 5a;
- Fig. 6a: eine perspektivische Ansicht einer weiteren Ausführung einer erfindungsgemäßen Anschlusseinrichtung mit zwölf Durchgangskanälen;
- Fig. 6b: eine andere perspektivische Ansicht des Anschlussstücks gemäß Figur 6a;
- Fig. 7a: eine perspektivische Ansicht einer weiteren erfindungsgemäßen Anschlusseinrichtung gemäß einer weiteren Ausführung mit zwei Durchgangsöffnungen;
- Fig. 7b: eine Frontansicht der erfindungsgemäßen Anschlusseinrichtung gemäß Figur 7a mit Blick auf deren Außenseite bzw. Mikrorohreingangsseite;
- Fig. 7c: eine Seitenansicht auf die erfindungsgemäße Anschlusseinrichtung gemäß Figur 7a;
- Fig. 7d: eine perspektivische Querschnittsansicht der erfindungsgemäßen Anschlusseinrichtung nach Figur 7a;
- Fig. 8a: einer schematische perspektivische Ansicht eines erfindungsgemäßen Glasfaserverteilerkastens mit einer in einer Durchgangsöffnung des Glasfaserverteilerkastens eingesetzten erfindungsgemäßen Anschlusseinrichtung mit zwei Durchgangskanälen, die je mit einem Mikrorohr mit Glasfaserkabel bestückt sind;
- Fig. 8b: eine schematische Querschnittsansicht des erfindungsgemäßen Glasfaserverteilerkastens und der darin eingesetzten erfindungsgemäßen Anschlusseinrichtung nach Figur 8a;
- Fig. 8c: eine weitere perspektivische schematische Ansicht eines Glasfaserverteilerkastens mit darin eingesetztem Anschlussstück nach Figur 8a aus einem anderen Blickwinkel;
- Fig. 9a: eine perspektivische Ansicht einer erfindungsgemäßen Anschlusseinrichtung gemäß einer weiteren Ausführung mit 16 Durchgangskanälen;
- Fig. 9b: eine Frontansicht auf eine Außenseite bzw. Mikrorohr-Eingangsseite einer erfindungsgemäßen Anschlusseinrichtung gemäß Figur 9a;
- Fig. 9c: eine Seitenansicht der erfindungsgemäßen Anschlusseinrichtung gemäß Figur 9a; und
- Fig. 9d: eine schematische perspektivische Querschnittansicht der Anschlusseinrichtung gemäß Figur 9a.

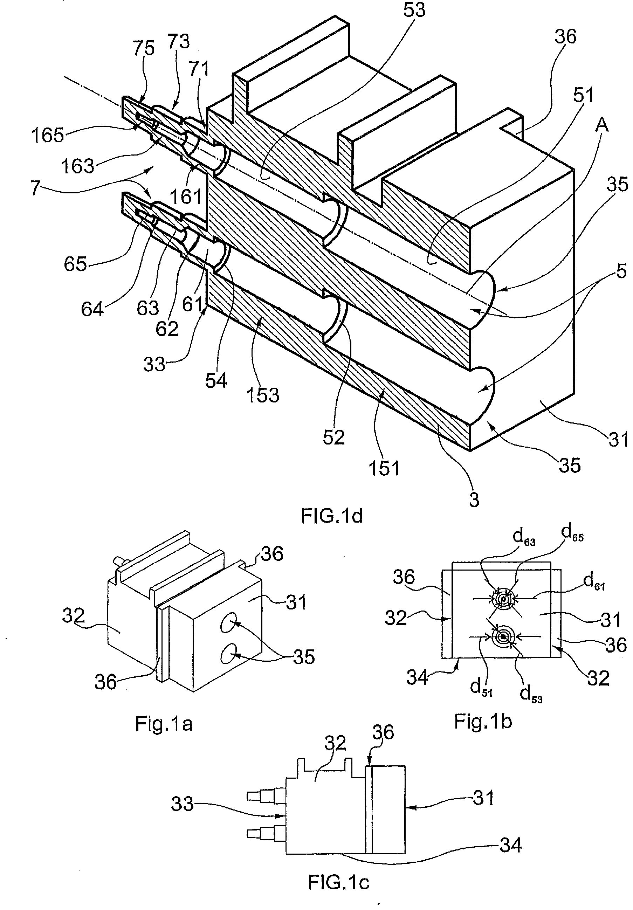

In Figur 1a bis 1d ist eine erfindungsgemäße Anschlusseinrichtung im Allgemeinen mit der Bezugsziffer 1 versehen. Die Anschlusseinrichtung 1 ist in den Figuren 1a bis 1d ohne einen Glasfaserverteilerkasten dargestellt, in den die Anschlusseinrichtung 1 einsetztbar ist. Es sei klar, dass die erfindungsgemäße Anschlusseinrichtung 1 gegenüber einem Glasfaserverteilerkasten als separates Bauelement hergestellt werden kann und als austauschbare Lagerware vorrätig sein kann, um verschiedene Mikrorohre aufzunehmen und an Verteilerkästen anschließen zu können.

In Figur 1a bis 1d ist ein Tragkörper im Allgemeinen mit der Bezugsziffer 3 angegeben. Der Tragkörper 3 ist aus einem Gummimaterial hergestellt und kann beispielsweise als Silikon, Naturkautschuk, thermoplastisches Elastomermaterial, EPDM oder NBR, mittels eines Spritzgießvorgangs einstückig hergestellt sein. Die Anschlusseinrichtung 1 bzw. des Anschlussstücks hat einen Tragkörper 3 mit zwei Anschlusskanälen bzw. Durchgangskanäle 5, die im Detail in Figur 1d abgebildet sind.

Die beiden Durchgangskanäle 5, die sich quer durch den Tragkörper 3 der Anschlusseinrichtung 1 erstrecken, sind gemäß dem in den Figuren 1a bis 1d dargestellten Ausführungsbeispielexemplare identisch, kongruent zueinander geformt. Es sei klar, dass eine alternative erfindungsgemäße Anschlusseinrichtung, die mehrere Durchgangskanäle 5 aufweist, unterschiedlich geformte und/oder dimensionierte Durchgangskanäle aufweisen kann (nicht dargestellt), beispielsweise um Mikrokanäle sehr unterschiedlicher Außendurchmesser aufzunehmen. Beispielsweise könnte ein erster Durchgangskanal für Mikrorohre mit einem Außendurchmesser von 3 mm bis 8 mm vorgesehen sein und ein zweiter Durchgangskanal für Mikrokanaldurchmesser zwischen 10 mm und 20 mm.

Die Anschlusseinrichtung 1 ist ausgelegt zur flexiblen Montage von unterschiedlich großen Mikrorohren innerhalb denen unterschiedlich große Glasfaserkabel geführt sein können. Zu diesem Zweck weist jeder Durchgangskanal 5 der Anschlusseinrichtung 1 zwei in Axialrichtung A des Durchgangskanals 5 hintereinander angeordnete Rohraufnahmeabschnitte 151, 153, die je eine schlauchförmige, zylindrische Rohraufnahme-Innenseite (51, 53) im Wesentlichen konstanten Durchmessers d₅₁, d₅₃ definieren. Der erste Rohraufnahmeabschnitt 151, der unmittelbar angrenzend an der Außenseite 31 des Tragkörpers 3 beginnt, weist den größten Innendurchmesser d₅₁ des Durchgangskanals 5 auf, der zugleich dem Innendurchmesser der Mikrorohr-Eingangsöffnung 35 entspricht.

Der Durchmesser d₅₁ des Durchgangskanaleingangs 35 und des ersten Rohraufnahmeabschnitts 151 kann beispielsweise zwischen 5 mm und 8 mm, insbesondere etwa 6,6 mm betragen. Die Länge des ersten Rohraufnahmeabschnitts in Axialrichtung A kann beispielsweise zwischen 10 mm und 30 mm, insbesondere 20 mm betragen. In Axialrichtung A unmittelbar an den ersten Rohrabschnitt 151 anschließend folgt ein zweiter Rohraufnahmeabschnitt 153, der einen Rohraufnahme-Innenseite 153 mit einem Innendurchmesser d₅₃ definiert, welcher kleiner ist als der Innendurchmesser d₅₁ des ersten Rohrabschnitts 151. Der Innendurchmesser d₅₃ des zweiten Rohrabschnitts 153 kann beispielsweise zwischen 2,5 mm und 4,5 mm, insbesondere bei etwa 4,4 mm liegen. Die Länge des zweiten Rohraufnahmeabschnitts kann beispielsweise zwischen 10 mm und 20 mm, insbesondere etwa 15 mm betragen.

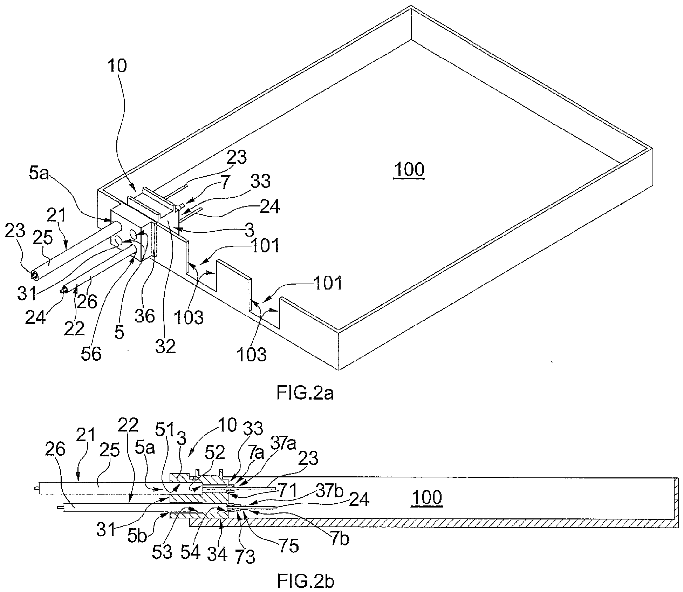

Der Übergang von dem ersten Rohraufnahmeabschnitt 151 zu dem zweiten Rohraufnahmeabschnitt 153 erfolgt bei der Anschlusseinrichtung 1 sprungartig bzw. stufenartig an dem sich quer, insbesondere senkrecht, zur Axialrichtung A erstreckenden Innenabsatz 52, der einen axialen Endanschlag für ein den Durchgangskanal 5 belegendes Mikrorohr (nicht dargestellt) bereitstellt. Der zweite Rohraufnahmeabschnitt 153 endet an einem zweiten sich quer, vorzugsweise senkrecht, zu der Axialrichtung A des Durchgangskanals 5 erstreckenden Innenabsatz 52, der einen Axialendanschlag für ein kleineres, den Durchgangskanal 5 belegendes Mikrorohr bereitstellt (nicht dargestellt). Auf die Belegung einer Anschlusseinrichtung mit Mikrorohren wird im Detail unter Bezugnahme auf die Figuren 2a und 2b eingegangen, wobei Entsprechendes im Hinblick auf die Ausführung der Anschlusseinrichtung 1 gemäß der Figuren 1a bis 1d gilt.

Der erste Rohraufnahmeabschnitt 151 und der zweite Rohraufnahmeabschnitt 153 erstrecken sich über fast die gesamte Länge des grob quaderförmigen bzw. würfelförmigen Grundtragkörpers. Die Länge der ersten und zweiten Rohraufnahmeabschnitte 151, 153 ist derart bemessen, dass ein stabiler Halt eines einsetzbaren Mikrokanals (nicht dargestellt) gegen unbeabsichtigtes Herausziehen durch die Reibungskräfte wegen dem Berührkontakt der Außenseite des Mikrorohres (nicht dargestellt) und einer der Rohraufnahme-Innenseiten 51 oder 53 gewährleistet ist. Die Rohraufnahme-Innenseiten 51, 53 sind schlauchartig vollumfänglich ausgebildet und insbesondere frei von Schwächungen, wie Längsschlitzen oder dergleichen. Im Verlauf von der Außenseite 31 des Tragkörpers 3 in Richtung auf dessen Innenseite 33 zu, verjüngt sich im montierten Zustand (nicht dargestellt; vgl. Figuren 2a, 2b) der Durchgangskanal 5 infolge eines stufenweise kleiner werdenden Innendurchmessers d₅₁, d₅₃ der hintereinander folgenden Rohraufnahmeabschnitte 151, 153.

In Axialrichtung A folgt auf dem Rohraufnahmeabschnitt des Durchgangskanals 5 ein Kabelaufnahmeabschnitt 161. Der Kabelaufnahmeabschnitt 161 definiert eine Kabelaufnahme-Innenseite 61 mit einem Innendurchmesser d₆₁, der kleiner ist als der Innendurchmesser d₅₁ bzw. d₅₃ des Rohraufnahmeabschnitts 151 bzw. 153.

In Axialrichtung A dem ersten Kanalaufnahmeabschnitt 161 folgend sind zwei weitere Kanalaufnahmeabschnitte 163, 165 vorgesehen. Die danach folgenden Kabelkanalaufnahmeabschnitte 163, 165 weisen je eine Kabelaufnahme-Innenseite 63, 65 auf, die je einen Innendurchmesser d₆₃, d₆₅ definiert, der stetig kleiner wird.

Durch die fortschreitend stufenweise kleiner werdenden lichten Weiten der Durchgangskanalabschnitte, also zunächst der Rohraufnahmeabschnitte 151, 153 und anschließend der Kabelaufnahmeabschnitte 161, 163, 165, verjüngt sich der Durchgangskanal 5 von der Außenseite 31 zur Innenseite 33 kontinuierlich.

Die axiale Länge eines einzelnen Kabelaufnahmeabschnitts liegt zwischen 2 mm und 10 mm, vorzugsweise zwischen 3 mm und 6 mm. Ein erster Kabelaufnahmeabschnitt kann einen Innendurchmesser von 2 mm bis 4 mm, vorzugsweise etwa 3 mm haben. Ein zweiter Kabelaufnahmeabschnitt kann einen Innendurchmesser von 1 mm bis 2 mm, vorzugsweise etwa 1,3 mm oder 1, 5 mm haben. Ein dritter Kabelaufnahmeabschnitt kann einen Innendurchmesser d₆₅ von 0,2 mm bis 1,0 mm, vorzugsweise etwa 0,5 mm oder 0,8 mm haben.

Zwischen dem ersten Kabelaufnahmeabschnitt 161 und dem zweiten Kabelaufnahmeabschnitt 163 ist ein sich kegelstumpfförmig verjüngender Konusabschnitt bzw. Trichterabschnitt 62 vorgesehen. Die kegelstumpfförmige Verjüngung 62 zwischen der ersten Kabelaufnahmeinnenseite 61 und der zweiten Kabelaufnahmeinnenseite 63 definiert eine schräge, sich quer, zwischen 30° und 60°, vorzugsweise etwa 45° relativ zu der Axialrichtung A geneigte Oberfläche, die an ihrem radial und axial äußeren Ende einen maximalen Durchmesser aufweist, der dem Innendurchmesser d₆₅ des ersten Kabelaufnahmeabschnitts 161 entspricht. An dem radial und axial inneren Ende ist der Trichterabschnitt 62 entsprechend mit einem Innendurchmesser d₆₃ des zweiten Kabelaufnahrneabschnitts 163 bemessen.

Zwischen dem zweiten Kabelaufnahmeabschnitt 163 und dem dritten Kabelaufnahmeabschnitts 165 ist wiederum ein sich kegelstumpfförmig bzw. trichterartig verjüngender Übergangsabschnitt 64 vorgesehen, der axial und radial außenseitig denselben Durchmesser d₆₃ wie der zweite Kabelaufnahmeabschnitt 163 aufweist. Radial und axial innenseitig weist der Übergangsabschnitt 64 den Innendurchmesser d₆₅ des kleinsten Kabelaufnahmeabschnitts 165 auf. Anstelle der beschriebenen und in Figur 1d dargestellten konischen Übergänge können zwischen den Kabelaufnahmeinnenseiten 161, 163 und 165 wiederum stufenförmige Übergänge, die sich im Wesentlichen senkrecht zu der Axialrichtung A des Durchgangskanals 5 erstrecken, ausgebildet sein. Allerdings sind die Übergänge zwischen den Kabelaufnahmeabschnitten 161, 163 und 165 vorzugsweise relativ zu der Axialrichtung A deutlich, insbesondere zwischen 30° und 60°, vorzugsweise etwa 45° geneigt, um eine gute Ein- und/oder Durchführbarkeit von Glasfaserkabeln (nicht dargestellt) zu gestatten.

Die in den Figuren 1a bis 1d dargestellte Anschlusseinrichtung weist die einzelnen Durchgangskanalabschnitte, also die Rohraufnahmeabschnitte 151, 153 und die Kabelaufnahmeabschnitte 161, 163, 165 auf, die jeweils im Wesentlichen konstante Innendurchmesser über ihre axiale Gesamterstreckung haben. Alternativ können die einzelnen Durchgangskanalabschnitte, vorzugsweise wenigstens ein Rohraufnahmeabschnitt und/oder wenigstens ein Kabelaufnahmeabschnitt, sich konisch verjüngend in Richtung der Innenseite 33 ausgestaltet sein, wobei beispielsweise ein Innenseiten-Neigungswinkel zwischen 5° und 15°, insbesondere etwa 10° relativ zu der Axialrichtung A realisiert sein kann (nicht dargestellt).

Bei der Anschlusseinrichtung 1 gemäß der Figur 1a sind der zweite Kabelaufnahmeabschnitt 163 und der dritte Kabelaufnahmeabschnitt 165 vollständig in einer sich an der Verlängerung des Durchgangskanals 5 an der Rückseite 33 des Tragkörpers 3 erstreckenden Noppe 7 ausgebildet. Der erste Kabelaufnahmeabschnitt 161 ist teilweise innerhalb des Quaderkörpers des Tragkörpers 3 und teilweise in der daran in Axialrichtung A anschließenden Noppe 7 realisiert.

Die Noppe 7 hat an dem Übergangsbereich von dem Quaderkörper des Tragkörpers 3 zu dem zylindrischen Noppenteil einen Noppenfuß 71, in dem der erste Kabelaufnahmeabschnitt 161 ausgebildet ist. In Axialrichtung A schließt an den Noppenfuß ein Noppenrumpf 73 an, in dem der zweite Kabelaufnahmeabschnitt 163 realisiert ist. Zuletzt folgt ein Noppenhals 75, in dem der dritte und letzte Kabelaufnahmeabschnitt 165 realisiert ist, der in dem Noppenhals 75 sacklochartig endet.

Die äußere Oberfläche der Noppe 7 ist in den Noppenfuß 71, dem Noppenrumpf 73 und dem Noppenhals 75 dergestalt untergliedert, dass der Noppenfuß 71 den größten und der Noppenhals 75 den kleinsten Außendurchmesser aufweisen. Die einzelnen als Noppenfuß 71, Noppenhals 75 und Noppenrumpf 73 realisierten Abschnitte der Noppe 7 haben zylindrische Außenflächen, die turmartig aufeinander sitzen. Die unterschiedlichen Außendurchmesser von Noppenfuß 71, Noppenrumpf 73 und Noppenhals 75 ähneln der stufenartigen Abstufung der Innendurchmesser des ersten (161), zweiten (163) und dritten Kabelaufnahmeabschnitts 165.

Indem die von dem Quaderkörper des Tragkörpers 3 hinaus ragende Abschnitte der Noppe einzeln oder zu mehreren abgeschnitten oder abgerissen werden, kann bei der in Figur 1a bis 1d dargestellten Ausführung der Anschlusseinrichtung 1 eine Verteilerkasten-innenseitige Öffnung des Durchgangskanals 5 realisiert werden. Ein Abreißen kann beispielsweise durch einen umlaufenden Nutring vereinfacht sein. Alternativ kann in die Noppe 7 eine Glasfaserkabel-Durchtrittsöffnung durch Freilassen einer vorzugsweise koaxialen (nicht dargestellten) Öffnung für ein Glasfaserkabel in der Noppe 7 bei deren Fertigung bereitgestellt sein. Zwischen der Außenseite 31 und der Innenseite 33 hat der Tragkörper 3 vorzugsweise planparallele, einander diametral gegenüber liegende Seitenflächen 32 und eine vorzugsweise senkrecht zu den Seitenflächen 32 gebildete Unterseite 34. Die Unterseite 34 erstreckt sich vorzugsweise über die gesamte axiale Länge sowie die gesamte Breite quer zur axialen Länge, um auf einer ebenen Oberfläche, beispielsweise in einem Glasfaserverteilerkasten, bündig aufsetzbar zu sein. An den Seitenflächen 32 des Tragkörpers 3 kann eine Montatgeführung ausgebildet sein, die einen Klemmeingriff gegenüber diametral gegenüberliegenden Wandrändern eines Glasfaserverteilerkastens, die eine Durchgangsöffnung begrenzen, realisieren, um eine translatorische Montageeinschieberichtung des Tragkörpers gegenüber dem Glasfaserverteilerkasten quer, vorzugsweise senkrecht, relativ zu der Durchgangskanallängsrichtung, zu definieren. Alternativ oder zusätzlich kann ein Führungssteg 36 zum Montageeinschub, beispielsweise für eine Glasfaserverteilergehäuse-Einschubnut vorgesehen sein.

Die Figuren 2a und 2b zeigen eine zweite Ausführung einer erfindungsgemäßen Anschlusseinrichtung 10, die in einer Durchgangsöffnung 101 eines Glasfaserverteilerkastens 100 sitzt. Die Anschlusseinrichtung 10 gemäß der Figuren 2a und 2b unterscheidet sich von der Anschlusseinrichtung 1 gemäß der Figuren 1a und 1d im Wesentlichen nur dadurch, dass sie vier Durchgangskanäle 5 aufweist und dass von diesen vier Durchgangskanälen gemäß der Abbildung zwei mit Mikrorohren 21, 22 belegt sind. Für dieselben oder einander entsprechende Elemente der Anschlusseinrichtungen 1, 10 (11, 12, 13, 14) werden dieselben oder ähnliche Bezugszeichen verwendet, wie bereits für die Figuren 1a bis 1d. Die Durchgangskanäle 5 der Anschlusseinrichtungen 1 bzw. 10 (12, 13, 14) unterscheiden sich im Wesentlichen nur durch ihre Anzahl, sodass die vorigen und nachfolgende Beschreibungen im Hinblick auf die Durchgangskanäle 5 (mit Ausnahme ihrer Anzahl) sowohl für die oben beschriebene Anschlusseinrichtung 1 sowie auch für die nachfolgend beschriebene Anschlusseinrichtungen gleichermaßen gelten.

Bei Figur 2a ist der Glasfaserverteilerkasten 100 mit drei im Wesentlichen gleich großen Durchgangsöffnungen 101 ausgestattet. Die Durchgangsöffnungen 101 des Glasfaserverteilerkastens 100 sind entlang einer Seite des rechteckigen Glasfaserverteilerkastens 100 äquidistant verteilt angeordnet. Es sei klar, dass der Glasfaserverteilerkasten eine einzige, zwei oder vier Durchgangsöffnungen für Anschlusseinrichtungen aufweisen kann.

Jede Durchgangsöffnung bzw. Wandöffnung 101 des Glasfaserverteilerkastens 100 weist zwei einander diametral gegenüberliegende, insbesondere parallele Wandränder 103 auf, die in eine Nut des Tragkörpers 3 eingreifen können. Die von den einander gegenüberliegenden Seitenflächen 32 der Anschlusseinrichtung 10 hervorstehende Stege 36 bilden ein Halteanschlag für die Befestigung der Anschlusseinrichtung 10 an dem Glasfaserverteilerkasten 100. Die Wandränder 103 erstrecken sich bis zu einer planen Bodenfläche des Verteilerkastens 100, auf dem die Bodenseite 34 der Anschlusseinrichtung 10 aufliegt. Der Verteilerkasten 100 kann durch einen (nicht dargestellten) Deckel fluid- und/oder staubdicht geschlossen werden. Die Anschlusseinrichtung 10 kann einen Mikrorohr-Abdichtzustand bzw. Glasfaserkabel-Abdichtzustand einnehmen, in dem die Anschlusseinrichtung 10 wie dargestellt mit einem Mikrorohr 21, 22 und einem darin geführten Glasfaserkabel 23, 24 belegt ist. Dabei kann die Noppe, wie Noppe 7a, abgeschnitten oder, wie die Noppe 7b, axial von dem Glasfaserkabel durchdrungen sein. Von den vier Durchgangskanälen 5, 5a und 5b der Anschlusseinrichtung 10 sind zwei mit unterschiedlich großen Mikrorohren 21, 22 belegt und die anderen beiden unbelegt und durch Noppen 7 geschlossen.

Die beiden von dem Anschlussstück 10 aufgenommenen Mikrorohre 21, 22 sind fluiddicht an dem Glasfaserverteilerkasten 100 abgeschlossen, wie im Folgenden im Detail dargelegt. Die Mikrorohre unterscheiden sich dadurch, dass das erste Mikrorohr 21 einen größeren Außendurchmesser als das zweite Mikrorohr 22 aufweist. Beide Mikrorohre 21, 22 sind mit je einem Glasfaserkabel 23, 24 belegt. Das Glasfaserkabel 23, welches das erste, größere Mikrorohr 21 belegt, kann genauso groß sein wie das zweite Glasfaserkabel 24, welches das zweite, kleinere Mikrorohr 22 belegt, ist jedoch vorzugsweise größer. Das erste Mikrorohr 21 ist abddichtend in dem ersten Rohraufnahmeabschnitt 151 des ersten Durchgangskanals 5a aufgenommen. Die Rohraußenseite 25 des ersten Mikrorohres 21 steht in einem flächigen Berührkontakt mit der Rohraufnahme-Innenseite 51 des ersten Rohraufnahmeabschnitts 151. Aufgrund der Elastizität des elastisch verformbaren Materials des Tragkörpers 3, welcher den Tragkörper 3 komplett bildet, bildet dieser Berührkontakt eine erste Abdichtung. Die Stirnseite des Mikrorohrs 21 steht in Kontakt mit dem Endanschlag 52 des ersten Rohraufnahmeabschnitts 151.

Das von dem ersten, großen Mikrorohr 21 geführten Glasfaserkabel 23 ragt in Axialrichtung A Verteilerkasten-innenseitig aus dem Stirnende des Mikrorohrs 21 hervor und erstreckt sich durch den zweiten Rohraufnahmeabschnitt 153 des Durchgangskanals 5a und durch die eine Öffnung 37a der Noppe 7. Der Noppenfuß 71 steht abschnittsweise in einem vollumfänglichen Berührkontakt mit dem ersten Glasfaserkabel 23 und realisiert so eine zweite Abdichtung. Die Kabelaufnahmeinnenseite steht in einem abdichtenden, vollumfänglichen Berührkontakt mit der Außenseite des Glasfaserkabels 23.

Das zweite, kleinere Mikrorohr 22 steht mit seiner Rohraußenseite 26 in einem flächigen Berührkontakt mit der Rohraufnameinnenseite 53 des zweiten Rohraufnahmeabschnitts153 und erstreckt sich berührungsfrei durch den ersten Rohraufnahmeabschnitt 151. Das stirnseitige Ende des zweiten, kleineren Mikrorohrs 22 berührt anschlagend den zweiten Innenabsatz 54 des Durchgangskanals 5b.

Das zweite Glasfaserkabel 24 erstreckt sich aus dem zweiten Mikrorohr 22 hinaus, durch den Tragkörper 3 bis in das Innere des Verteilerkastens 100. Die Außenseite des zweiten Glasfaserkabels 24 steht in einem flächigen Berührkontakt mit den Kabelaufnahme-Innenseiten 63, 65 des zweiten und des dritten Kabelaufnahmeabschnitts 163, 165. Das Glasfaserkabel 24 durchdringt den Noppenhals 75 der Noppe 7b.

Die Art des Hindurchragens des Glasfaserkabels durch den Tragkörper 3 und dessen Noppe 7 kann montagebedingt abhängig von dem Außendurchmesser des Glasfaserkabels 23, 24 gewählt werden. Unabhängig von der Durchdringungsart des Glasfaserkabels 23, 24 durch die Noppe 7, 7a, 7b des Tragkörpers 3 der Anschlusseinrichtung 10 ist die Einsteckmontage des Mikrorohres 21, 22 in die Anschlusseinrichtung wählbar.

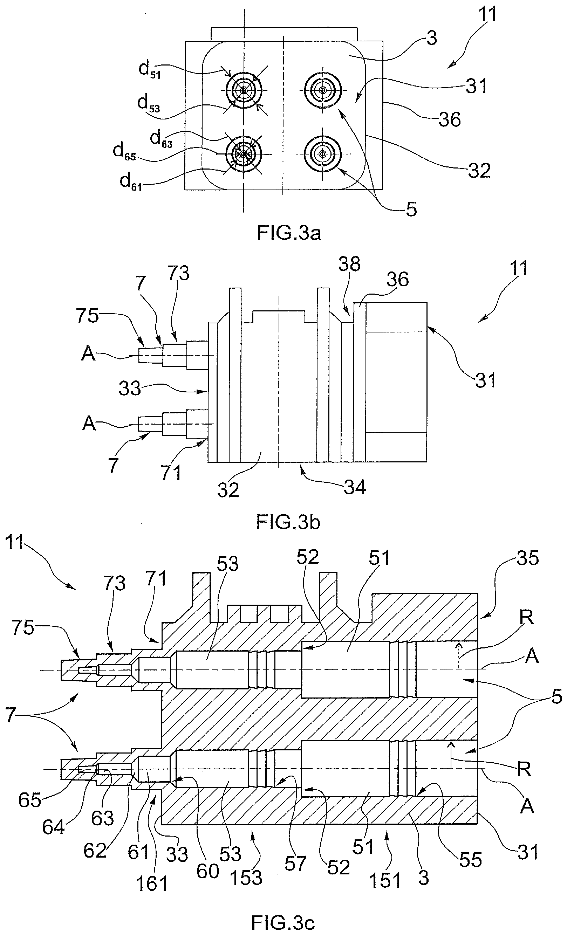

Die Figuren 3a bis 3c zeigen eine weitere bevorzugte Ausführung des erfindungsgemäßen Anschlussstücks, das mit dem Bezugszeichen 11 versehen ist.

Der Aufbau der Anschlusseinrichtung 11 entspricht weitgehend dem der oben in Bezug auf die Figuren 1a bis 1d und 2a und 2b beschriebenen Anschlusseinrichtungen 1 und 10. Im Folgenden werden daher für dieselben oder ähnliche Bauelemente wie zuvor dieselben oder ähnliche Bezugszeichen verwendet. Es sei klar, dass sämtliche Ausführungen zu der Anschlusseinrichtungen 1, 10, 12, 13, 14 soweit nicht ausdrücklich als unterschiedlich angegeben, auch auf die Anschlusseinrichtung 11 gemäß der Figuren 3a bis 3c zutreffen, und umgekehrt.

Der Quadergrundkörper des Tragkörpers hat wie bei den oben beschriebenen Anschlusseinrichtungen 1, 10 eine im Wesentlichen würfelartige Form, von der aus sich in Axialrichtung A in Verlängerung des Durchgangskanals 5 an der Innenseite 33 des Tragkörpers 3 die Noppen 7 erstrecken. Die axiale Länge der unverformten, sich in ihrem Montageausgangszustand befindenden Noppen 7, kann zwischen 8 mm und 16 mm, vorzugsweise zwischen 10 mm und 12 mm, insbesondere bei etwa 11,5 mm liegen. Die axiale Länge des Tragkörpers 3 liegt vorzugsweise zwischen 30 mm und 50 mm, vorzugsweise zwischen 30 mm und 45 mm. Die Noppen erstrecken sich also bei einer axialen Länge, die zwischen 10% und 30% der axialen Länge des Quadergrundkörpers des Tragkörpers 3 beträgt. Eine Besonderheit der Geometrie der Durchgangskanäle 5 zu der Anschlusseinrichtung 11 besteht darin, dass nur der erste Rohraufnahmeabschnitt 151 in Axialrichtung A in einem senkrecht zu der Axialrichtung A stehenden Innenabsatz, der einen Endanschlag für ein Mikrorohr bildet, endet. Der zweite Rohraufnahmeabschnitt 153 hat an seinem axialen innenseitigem Ende einen sich konisch, trichterförmig verjüngenden Übergang 60 der Innenkontur hin zu dem ersten Kabelaufnahmeabschnitt 161. Indem der radiale Abstand zwischen dem Innendurchmesser des ersten Kabelaufnahmeabschnitts und des hintersten Rohraufnahmeabschnitts 153 derart groß gewählt wird, dass der zumindest der Hälfte, vorzugsweise der vollständigen Wandstärke eines Mikrorohres entspricht, kann auch ein relativ zu der Axialrichtung A deutlich geneigter Übergang 60 eine definierte Endposition eines eingesetzten Mikrorohres gewährleisten.

Ein weiterer Unterschied zu den anderen beschriebenen Anschlusseinrichtungen besteht bei der Anschlusseinrichtung 11 darin, dass die Rohraufnahme-Innenseiten 51, 53 jeweils mit einer Gruppe sägezahnartig angeordneter Rippen 55, 57 versehen sind.

In dem ersten Rohraufnahmeabschnitt 151 der Anschlusseinrichtung 11 ist etwa in axialer Mitte des Rohraufnahmeabschnitts 151 eine Gruppe von umlaufenden, von der Rohraufnahme-Innenseite 51 radial nach innen ragenden Rippen 55 vorgesehen. Die Rippen 55 sind derart keilförmig, dass sie entlang ihrer axialen Erstreckung ausgehend von der Tragkörper-Außenseite 31 in Richtung der Tragkörper-Innenseite 33 eine Einführschräge realisieren. Die Rippen 55 sind im Querschnitt etwa dreieckig, wobei die von der Kanalöffnung 35 entfernte Rückseite der Rippe 55 eine sich im Wesentlichen quer, vorzugsweise senkrecht, zu der Axialrichtung erstreckenden Rand aufweist. Die Einführschräge erstreckt sich bei den Rippen 55 über ihre gesamte axiale Länge. Die in Figur 3c dargestellte Form der Rippen 55 in dem ersten Rohraufnahmeabschnitt 151 gewährleistet ein leichtes Einführen eines Mikrorohres in den Rohraufnahmeabschnitt 151 (nicht dargestellt) und wirkt bei dem Versuch eines Herausziehens des Mikrorohres aus der Eingangsöffnung 35 eine Rückhaltekraft aus. Diese Rückhaltekraft ist im Vergleich zu der in Figur 1d dargestellten, glatten Rohraufnahme-Innenseite deutlich erhöht. Die Rippen 55 wirken widerhakend auf ein eingeführtes Mikrorohr ein, um es entgegen einer unbeabsichtigten Herausziehkraft in der Anschlusseinrichtung 11 zu sichern.

Es sei klar, dass eine oder mehrere Rippen nicht vollumfänglich an der Rohraufnahme-Innenseite 51 ausgebildet zu sein brauchen. Es hat sich als positiv im Hinblick auf die Dichtwirkung herausgestellt, wenn die Rippen vollumfänglich ausgebildet sind. Insofern können vollumfänglich ausgebildete Rippen 55 an einer Rohraufnahme-Innenseite 51 als verstärkte Rohrdichtungsvorrichtungen betrachtet werden.

Indem die Rippen 55 in dem ersten Rohraufnahmeabschnitt 151 nicht unmittelbar an der Eingangsöffnung 35 des Durchgangskanals 5 ausgebildet sind, wird sichergestellt, dass sie nicht durch leicht schräges Einsetzen eines Mikrokanals bei etwas unsauberen Montage verletzt werden. Ein Mindestabstand der ersten Rippe 55 zu dem Eingang 35 des Durchgangskanals 5 von wenigstens 3 mm, vorzugsweise mindestens 5 mm, insbesondere wenigstens etwa 7 mm, hat sich als besonders vorteilhaft erwiesen.

In dem zweiten Rohraufnahmeabschnitt 153 sind ebenfalls drei Rippen 57 angeordnet. Der Querschnitt der zweiten Rippengruppe 57 entspricht im Wesentlichen dem Querschnitt der ersten Rippengruppe 55. Es sei klar, dass eine unterschiedliche Querschnittsform, unterschiedliche Rippenanzahl, oder eine einzelne Anordnung einer oder mehrerer Rippen mit zylindrischer Rohraufnahme-Innenseite 53 bzw. 51 zwischen den einzelnen Rippen 57 bzw. 55 ebenfalls denkbar ist.

Wie die erste Rippengruppe 55 sind auch die Rippen 57 des zweiten Rohraufnahmeabschnitts 153 in einem Mindestabstand zu dem Beginn des Rohrabschnitts 153 angeordnet, der sicherstellt, dass ein eingeführtes Mikrorohr, das in einen Abdichteingriff mit der Rohrinnenseite 53 des zweiten Rohraufnahmeabschnitts 153 gelangen soll, die zweite Rippengruppe 57 nicht verletzt. Der axiale Abstand zum Beginn des zweiten Rohrabschnitts 135, vorliegend der radialen Stufe 52, kann etwas kleiner bemessen sein, als der Mindestabstand der Rippen 55 in dem ersten Rohraufnahmeabschnitt 151, da bereits eine gewisse Führung durch den ersten Rohraufnahmeabschnitt 151 gewährleistet ist, wenn ein Mikrorohr (nicht dargestellt) in den zweiten Rohraufnahmeabschnitt 153 eingeführt wird. Der axiale Abstand von Beginn des zweiten Rohraufnahmeabschnitts 153 zu der ersten Rippe 57 kann wenigstens 1 mm oder wenigstens 2 mm, vorzugsweise wenigstens 3 mm betragen.

Ferner unterscheidet sich die Anschlusseinrichtung 11, wie am besten in Figur 3b zu erkennen ist, von den zuvor beschriebenen Anschlusseinrichtungen 1, 10 durch eine an der lateralen Außenseite 32 des Tragkörpers 3 deutlich ausgeprägte Nut 38, die außenseitig eine Querschnittsverkleinerung gegenüber dem Quadergrundkörper des Tragkörpers 3 und insbesondere gegenüber dem seitlich hervorstehenden Rippen 36 ausgebildet ist. Die Nut 38 vereinfacht die Einsteckmontage eines Anschlussstücks 11 in einen Verteilerkasten, wie den Verteilerkasten 100 gemäß der Figur 2a.

Die radiale Höhe der Rippen 55 bzw. 57 ist im Vergleich zu dem jeweiligen Innendurchmesser d₅₁ bzw. d₅₃ des ersten bzw. zweiten Rohraufnahmeabschnitts 151 bzw. 153 klein und beträgt vorzugsweise weniger als 15%, weniger als 10% oder sogar weniger als 8% des vorzugsweise konstanten Innendurchmessers der jeweiligen ersten oder zweiten Rohraufnahme-Innenwand 51 bzw. 53. Beispielsweise kann der Innendurchmesser d₅₁ etwa 6,6 mm betragen und die radiale Höhe der Rippen 55 etwas 0,2 mm betragen. In dem zweiten Rohraufnahmeabschnitt 153 kann der Innendurchmesser d₅₃ der Rohraufnahme-Innenwand 53 etwa 4,4 mm und die radiale Höhe der Rippen 57 der Rohraufnahme-Innenwand 53 etwa 0,2 mm betragen. Wie in den drei oben beschriebenen Ausführungen von Anschlusseinrichtungen 1, 10 und 11 beschrieben und dargestellt, hat es sich als fertigungsbedingt und montagebedingt als günstig erwiesen, das gesamte Anschlussstück 11 einstückig aus einem Gummimaterial zu fertigen, einschließlich dem vollständigen Tragkörper 3, den Durchgangskanälen 5, das heißt insbesondere die Innenseiten 51, 53, 61, 62 und 65 sowie darin eventuelle vorgesehene Rückhaltevorrichtungen, wie etwa Rippen 55, 57. Auch die Noppen 7 sind einstückig mit den übrigen Teilen des Anschlussstücks 10 oder 11 gefertigt. Vorzugsweise ist eine Anschlusseinrichtung vollständig frei von anderen Materialien als dem Gummimaterial.

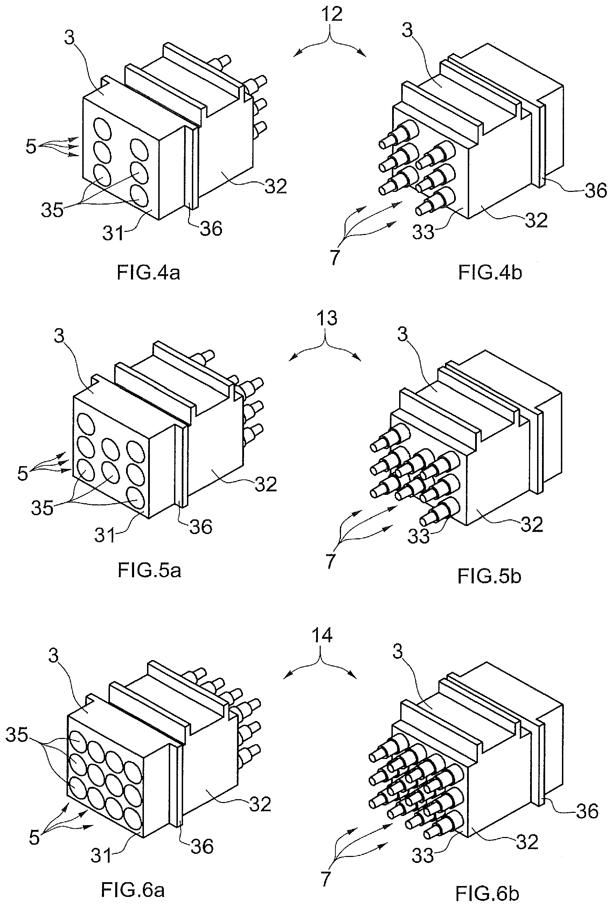

Die Figuren 4a und 4b, 5a und 5b bzw. 6a und 6b zeigen weitere erfindungsgemäße Anschlusstücke 12, 13 und 14. Die Anschlusseinrichtung 12 weist sechs Durchgangskanäle 5 auf. Die Anschlusseinrichtung 13 weist acht Durchgangskanäle 5 mit rückseitig abschließenden Noppen 7 auf. Die Anschlusseinrichtung 14 gemäß Figur 6a und 6b hat sogar zwölf Durchgangskanäle mit zwölf dazugehörigen Noppen 7.

Bei den unterschiedlichen Anschlusseinrichtungen 1, 10, 11, 12, 13 und 14 sind die Durchgangskanäle 5 in dem Tragkörper 3 im Wesentlichen gleichmäßig verteilt angeordnet. Beispielsweise bei den in Figuren 1a bis 1d und 2a bis 2d sowie 3a bis 3c dargestellten Anschlusseinrichtungen 1, 10 und 11 sind die Durchgangskanäle 5 etwa gleich weit zu den jeweils benachbarten Durchgangskanälen entfernt angeordnet. Der Abstand zwischen den Achsen A zweiter benachbarter Durchgangskanäle kann derart gewählt sein, dass er zwischen dem Doppelten und dem Dreifachen, vorzugsweise etwa bei dem 2,5-fachen des Durchmessers der Durchgangskanäle liegt. Beispielsweise können Durchgangskanäle 5 mit einem Eingangs-Durchmesser von etwas mehr als 6 mm einen Abstand von 10 mm bis 15 mm, vorzugsweise etwa 12 mm bis 14 mm, zu der Achse des jeweils benachbarten nächstliegenden Durchgangskanals aufweisen.

Insbesondere bei den in den Figuren 5a, 5b, 6a und 6b dargestellten Anschlusseinrichtungen 13 und 14 sind die Durchgangskanäle 5 relativ dicht über den Tragkörper 3 verteilt. Der kleinste Abstand zwischen zwei nächstliegenden oder benachbarten Durchgangskanälen ist größer als der Eingangs-Durchmesser, sodass keine Überschneidungen entstehen. Vorzugsweise liegt der Abstand zwischen den Achsen zweier nah benachbarter Durchgangskanäle zwischen dem 1,2-fachen und dem 2-fachen des Eingangs-Durchmessers.

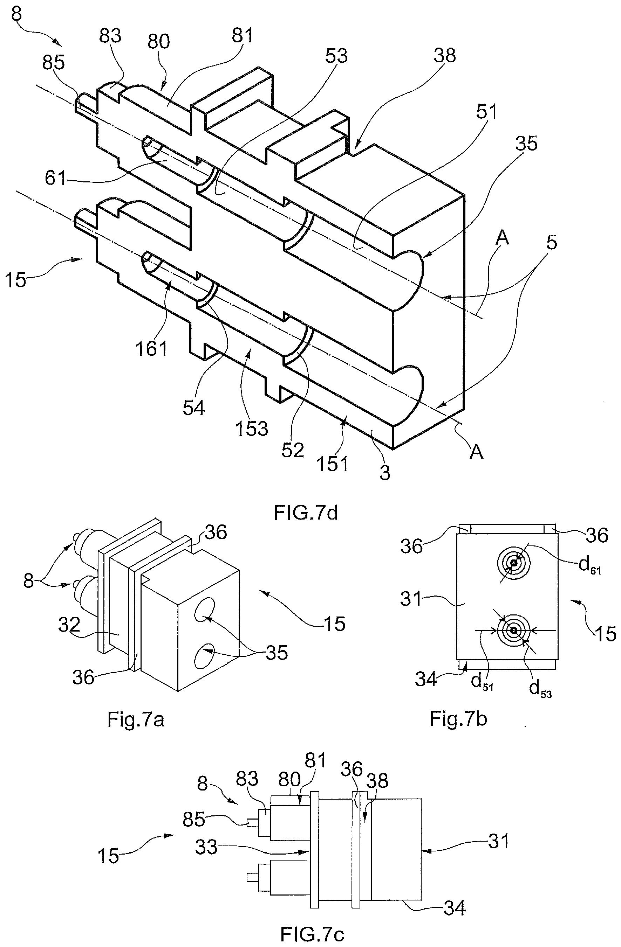

In den Figuren 7a bis 7d ist ein Tragkörper 3 einer weiteren Ausgestaltung einer erfindungsgemäßen Anschlusseinrichtung 15 dargestellt, welche dem Anschlussstück 1 wie oben bezüglich der Figuren 1a bis 1d beschrieben, sehr ähnlich ist, sodass für dieselben oder ähnliche Bauelement dieselben oder ähnliche Bezugszeichen verwendet werden. Ein Unterschied zwischen dem Anschlussstück 15 gegenüber dem oben beschriebenen Anschlussstück 1 liegt darin, dass an den Seitenflächen 32 Befestigungsnuten 38 und zusätzliche Befestigungsflansche 36 zum Einstecken und ortsfesten Halten des Anschlussstücks 15 in einem (nicht dargestellten) Glasfaserverteilerkasten angeordnet sind.

Im Wesentlichen zeichnet sich das Anschlussstück 15 durch die beiden Noppen 8 aus, die einen Halteabschnitt 80 aufweisen, sowie, unabhängig davon, durch die Geometrie des Durchgangskanals 5. Ähnlich der Anschlusseinrichtung 1 hat die Anschlusseinrichtung 15 zur flexiblen Aufnahme unterschiedlich große Mikrorohre 21, 22 in Axialrichtung A des Durchgangskanals 5 zwei hintereinander angeordnete Rohraufnahmeabschnitte 151, 153, die je eine schlauchförmige, zylindrische Rohraufnahme-Innenseite 51, 53 im Wesentlichen konstanter Durchmesser d₅₁, d₅₃ definieren. Der erste Rohraufnahmeabschnitt 151, welcher unmittelbar angrenzend an der Außenseite 31 des Tragkörpers 3 beginnt, weist den größten Innendurchmesser d₅₁ des Durchgangskanals 5 auf, der zugleich dem Innendurchmesser der Mikrorrohr-Eingangsöffnung 35 entspricht. Der Übergang 52 und der Verlauf vom ersten Rohraufnahmeabschnitt 151 und dem zweiten Rohraufnahmeabschnitt 153 entspricht im Wesentlichen der Ausgestaltung wie bezüglich des Anschlussstücks 1 dargelegt.

In Axialrichtung A folgt auf den Rohraufnahmeabschnitt des Durchgangskanals 5 ein Kabelaufnahmeabschnitt 161. Der Kabelaufnahmeabschnitt 161 definiert eine Kabelaufnahmeinnenseite 61 mit einem Innendurchmesser d₆₁, welcher kleiner ist als der Innendurchmesser d₅₁ bzw. d₅₃ der Rohraufnahmeabschnitte 151 und 153. Das Anschlussstück 15 weist nur einen einzigen Kabelaufnahmeabschnitt 161 auf, welcher in der Hülse 8 sacklochartig endet. Das sacklochartige Ende des Kabelaufnahmeabschnitts 161 befindet sich in dem Fußabschnitt 81 des Noppen oder Pfropfen 8. Auf diese Weise ist der Durchgangskanal im Montageausgangszustand, vor dem Belegen mit einem Glasfaserkabel, abdichtend geschlossen.

Im Vergleich zu dem Anschlussstück 1 sind die Noppen 8 des Anschlussstücks 15 wesentlich massiver und größer ausgestaltet. Die Noppen 8 erstrecken sich in Axialrichtung A über mehr als 1/4, vorzugsweise mehr als 1/3, insbesondere über etwa die Hälfte der Länge des Tragkörpers 3. Der nächstliegend dem Tragkörper 3 angeordnete Fußabschnitt 81 der Noppe 8 erstreckt sich in Axialrichtung A über mehr als die Hälfte der Gesamterstreckung der Noppe 8 und hat eine Länge von etwa 1 cm außerhalb des Tragkörpers 3, welcher eine axiale Länge von etwa 2,7 cm hat. Die lichte Weite bzw. der Innendurchmesser d₆₁ des Kabelaufnahmeabschnitts 161 entspricht im Wesentlichen dem Durchmesser eines üblichen Glasfaserkabels von beispielsweise weniger als 3 mm, insbesondere weniger als 1 mm. Der Außendurchmesser des Fußabschnitts 81 beträgt etwa 8 mm. Der Fußabschnitt 81 der Noppe 8 realisiert eine Halteabschnitt 80, mit dem das Anschlussstück 15 im Inneren des (nicht dargestellten) Glasfaserverteilerkastens durch ein Halteglied bzw. eine Halteeinrichtung unter Ausbildung einer Klemm- oder Pressverbindung aufgenommen werden kann. Eine Halteeinrichtung kann beispielsweise realisiert sein durch eine längliche Hülse mit C-förmigem Querschnitt, welcher einen kleineren Innendurchmesser aufweist als der Außendurchmesser des Noppen-Halteabschnitts 80. Eine Halteeinrichtung kann beispielsweise bei einem üblichen Glasfaserverteilerkasten dazu vorgesehen sein, ein Mikrorohr zu halten und entsprechende Innenabmaße aufweisen. Dementsprechend ist das Außenabmaß des Noppen-Halteabschnitts 80 derart gewählt, dass er wenigstens genauso groß, vorzugsweise jedoch größer ist, als die lichte Weite bzw. der Innendurchmesser d₅₁ bzw. d₅₃ der Rohraufnahmeabschnitte, in welchen ein Mikrorohr aufzunehmen ist. Halteeinrichtungen sind beispielsweise von der Firma Corning erhältlich, welche in Form von C-förmigen Manschetten mit einer Rastverbindung, die durch eine Rastnase und durch eine gegenüberliegende Rastaussparung an den Enden des C-förmigen Manschettenkörpers realisiert sind.

Wenn ein Glasfaserkabel durch das Anschlussstück 15 geführt wird, mit einem kleineren Au-βendurchmesser als der lichten Weite d₆₁ des Kabelaufnahmeabschnitts 161, kann der Halteabschnitt 80 derart bemessen sein, dass dort die lichte Weite des Kabelaufnahmeabschnitts, die Umfangsweite (hier: der Außendurchmesser der Noppe) und die Wandstärke zwischen dem Außendurchmesser und dem Innendurchmesser bzw. der lichten Weite und der Umfangsweite so groß ist, dass eine Wandstärke vorhanden ist, die ausreicht, um die Klemmkräfte von dem Halteglied auf das Glasfaserkabel zu übertragen, sodass das Einklemmen der Noppe 8 entlang dessen Halteabschnitts 80 eine vorzugsweise abdichtende Klemmverbindung zwischen der inneren lichten Weite des Kabelaufnahmeabschnitts 161 und dem aufgenommenen Glasfaserkabel bewirken kann.

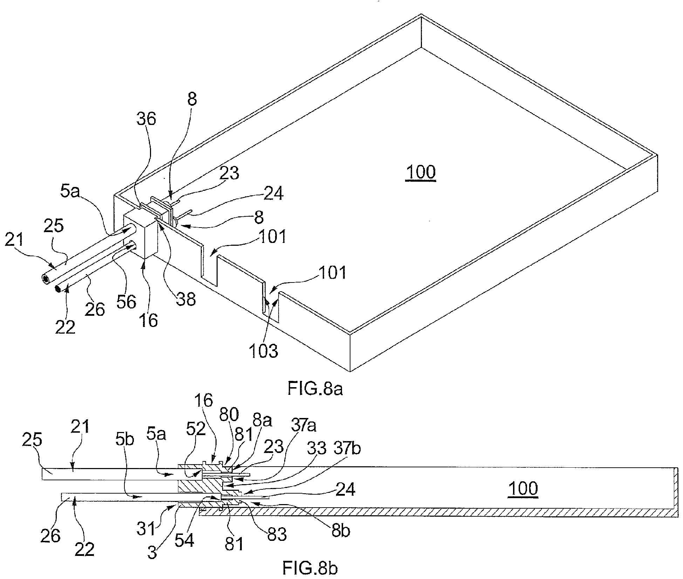

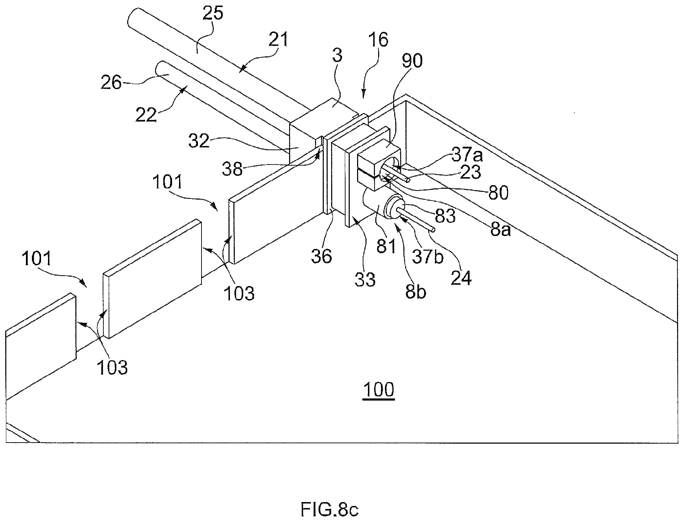

Die Figuren 8a,8b und 8c zeigen das Anschlussstück 16 (im montierten Zustand), das im Wesentlichen dem Anschlussstück 15 (im Ausgangszustand) entspricht. Das Anschlussstück 16 ist in einem Glasfaserkabelverteilerkasten 100 angeordnet und mit unterschiedlich großen Mikrorohren 21, 22 und darin geführten Glasfaserkabeln 23, 24 belegt. Die Glasfaserkabel 23, 24 sind etwa gleich groß. Das Mikrorohr 21 hat einen größeren Außenumfang als das Mikrorohr 22, sodass das Mikrorohr 21 in dem äußeren Rohraufnahmeabschnitt 151 und gegen einen ersten Innenabsatz 52 in dem Tragkörper 3 stößt, wohingegen das kleinere Mikrorohr 22 durch den zweiten Rohraufnahmeabschnitt 151 mit kleinerer lichter Weite gehalten ist und gegen den zweiten Innenabsatz 54 stößt. Die Kontaktbereiche, als die jeweilige Rohraufnahme-Innenseite 51, 53 und/oder die Innenabsätze 52 bzw. 54 bilden mit den Au-ßenflächen 25, 26 der Mikrorohre 21, 22 zusammenwirkende Dichtflächen.

Das Mikrorohr 22 ist in einem Durchgangskanal 5b angeordnet. Das Glasfaserkabel 24 des Mikrorohres 22 ist im Wesentlichen kontaktfrei durch den ersten Kabelaufnahmeabschnitt 161 der Noppe 8b geführt. In einem zweiten Abschnitt 83 der Noppe 8b erstreckt sich das zweite Glasfaserkabel 24 in Berührkontakt durch die Noppe 8b, sodass an dieser Stelle eine Glasfaserkabeldichtungsvorrichtung ausgebildet ist. Durch das Durchdringen der Noppe 8b mit dem Glasfaserkabel 24, welches an einer inneren Öffnung 37b in den Verteilerkasten 100 eintritt, ist beim Montieren des Anschlussstücks 16 und dessen Belegen mit einem Glasfaserkabel 24 ein weiterer Kabelaufnahmeabschnitt (ohne Bezugszeichen) gebildet. Der Kopfabschnitt der Noppe 8b ist abgetrennt.

Bei der Noppe 8a sind sowohl der Kopfabschnitt als auch der Rumpfabschnitt abgetrennt, sodass nurmehr ein Fußabschnitt 81 der Noppe 8a verbleibt. In der Abbildung gemäß Figur 8b erstreckt sich das Glasfaserkabel 23, welches den Durchgangskanal 5a belegt, im Wesentlichen kontaktfrei durch den Kabelaufnahmeabschnitt 161. Figur 8c zeigt den Halteabschnitt 80 der Noppe 8a in eine, Klemm- oder Presseingriff mit einer Halteeinrichtung in Form einer Klemme 90, sodass aufgrund der Wandmaße des Halteabschnitts 80 und der Kräfte, welche von der Klemme 90 ausgehen, ein Klemm- und Abdicht-Kontakt zwischen der Innenseite des Kabelaufnahmeabschnitts 161 und dem Glasfaserkabel 23 bewirkt wird.

Die Klemme 90 ist etwa würfelförmig mit einer zylindrischen Durchgangsöffnung zum Aufnehmen der Noppe 8a. Zur einfacheren Anbringung kann die Klemme 90 in Axialrichtung der Durchgangsöffnung in einer Seitenwand durchgehend oder abschnittsweise durch eine Schlitzöffnung unterbrochen sein, um ein vorzugsweise elastisches Aufweiten der Klemme 90 zur Montage zu erlauben. Es sei klar, dass eine Klemme 90 auch andere Formen haben kann.

Die axiale Länge der unverformten, sich in ihrem Montageausgangszustand befindenden Noppen 8, kann zwischen 5 mm und 40 mm, vorzugsweise zwischen 15 mm und 25 mm, insbesondere bei etwa 20 mm liegen. Der Halteabschnitt 80, der bei dem Tragköper 3 gemäß durch den aus dem Tragköper 3 hervorstehenden Teil des Noppenfußabschnitts 81 gebildet ist, kann eine axiale Länge aufweisen, die größer ist als 3 mm, vorzugsweise zwischen 6 mm und 10 mm, insbesondere bei etwa 8 mm liegt. Der sich innerhalb des Tragköpers 3 erstreckende Teil des Noppenfußabschnitts 81 kann eine axiale Länge aufweisen, die zwischen 1 mm und 10 mm, vorzugsweise zwischen 4 mm und 8 mm, insbesondere bei etwa 6 mm liegt. Figur 7 liegt die axiale Länge des Tragkörpers 3 vorzugsweise zwischen 20 mm und 40 mm, vorzugsweise zwischen 25 mm und 30 mm.

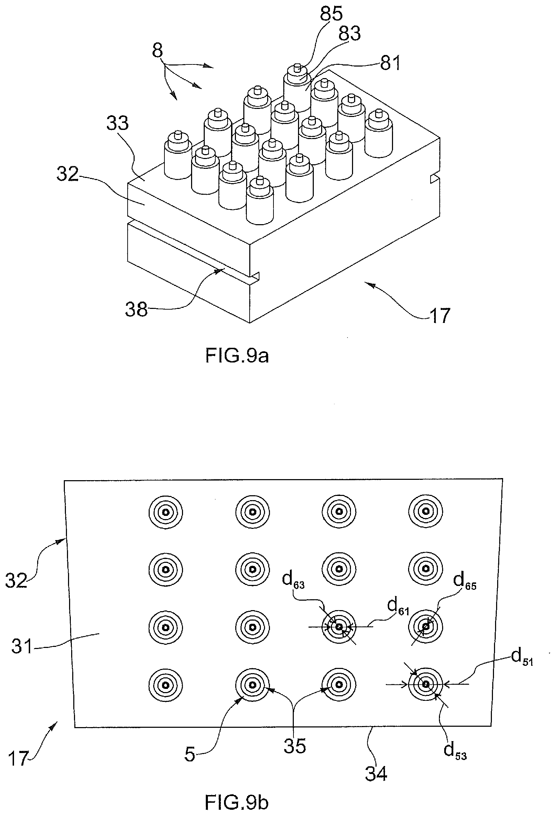

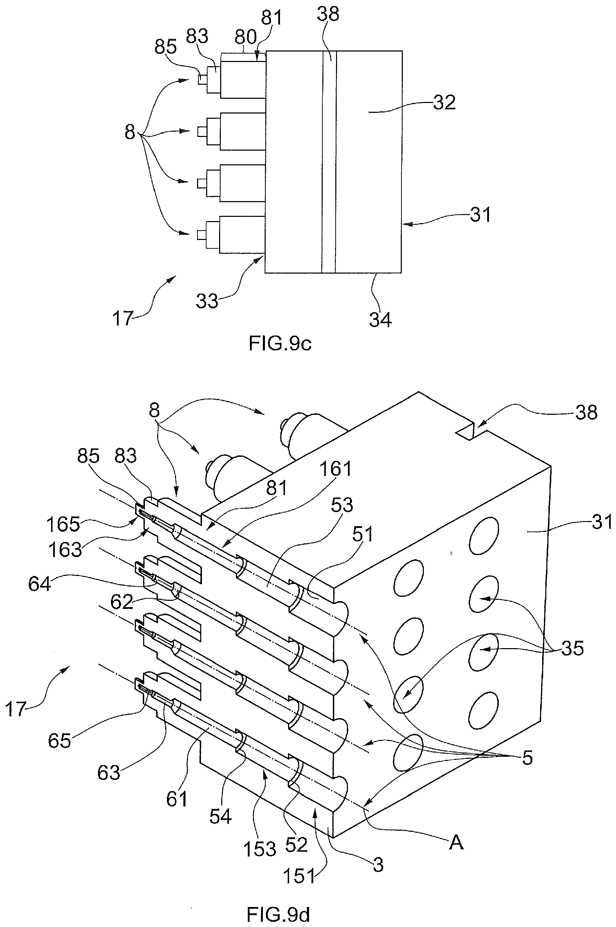

Die Figuren 9 bis 9c zeigen eine weitere bevorzugte Ausgestaltung eines erfindungsgemäßen Anschlussstücks 17 mit einem Tragkörper 3, der 16 Durchgangskanäle 5 aufweist.

Die Gesamt-Querschnittsfläche des Tragkörpers 3 ist etwa trapezförmig, wobei die Oberseite etwas breiter ist als die Unterseite 34, sodass sich die Seitenflächen 32 von oben nach unten pfeilförmig verjüngen mit einer Schrägung von vorzugsweise unter 20°, um den Tragkörper 3 einfach in einer Aussparung eines Glasfaserverteilerkastens einsetzen zu können. Zum besseren Halt weist der Tragkörper beidseitig an den Seitenflächen 32 ausgebildete Nuten 38 auf.

Bei dem Anschlussstück 17 sind die Durchgangskanäle 5 und Noppen 8 weitgehend wie die Durchgangskanäle 5 und Noppen 8 der Anschlussstücke 15 bzw. 16 ausgestaltet. Für dieselben und ähnlichen Bauteile werden daher dieselben oder ähnlichen Bezugszeichen verwendet. Außerdem wird auf die obige Beschreibung der anderen, ähnlichen Ausführungsformen verwiesen.

Der wesentliche Unterschied bei dem Anschlussstück 17 gegenüber dem zuvor beschriebenen Anschlussstück 15 bzw. 16 besteht darin, dass drei Durchgangskanalabschnitte 161, 163, 165 in Axialrichtung nach innen zumindest eine kleiner werdende lichte Weite bzw. Innendurchmesser d₆₁, d₆₃, d₆₅ aufweisen, welche sich durch den Fußabschnitt 81, den Rumpfabschnitt 83 und den Kopfabschnitt 85 der Noppe 8 erstrecken und erst in dem Noppenkopf 85 sacklochförmig enden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 10, 11, 12, 13, 14, 15, 16, 17: Anschlusseinrichtung
- 3: Tragkörper
- 5, 5a, 5b: Durchgangskanal
- 7, 7a, 7b, 8, 8a, 8b: Noppe
- 21 22: Mikrorohre
- 23, 24: Glasfaserkabel
- 25, 26: Rohraußenseite
- 31: Außenseite
- 32: Seitenflächen
- 33: Innenseite
- 34: Bodenseite
- 35: Kanalöffnung
- 36: Steg
- 37a, 37b: Öffnung
- 38: Nut
- 51, 53: Rohraufnahme-Innenseite
- 52, 54, 62: Innenabsatz
- 55, 57: Rippen
- 60: Übergang
- 61, 63, 65: Kabelaufnahme-Innenseite
- 62: Trichterabschnitt
- 64: Übergangsabschnitt
- 71: Noppenfuß
- 73: Noppenrumpf
- 75: Noppenhals
- 80: Halteabschnitt
- 81: Fußabschnitt
- 83: Rumpfabschnitt
- 85: Kopfabschnitt
- 100: Glasfaserverteilerkasten
- 101: Durchgangsöffnung
- 103: Wandränder
- 135: Rohrabschnitt
- 151, 153: Rohraufhahmeabschnitt
- 161, 163, 165: Kabelaufnahmeabschnitt

- A: Axialrichtung
- d₅₁, d₅₃ , d₆₁, d₆₃, d₆₅: Durchmesser

## Patentansprüche

1. Einrichtung zum insbesondere fluiddichten Anschließen mehrerer Mikrorohre (21, 22) an einen Glasfaserverteilerkasten (100), umfassend:
einen Tragkörper (3) aus einem elastisch verformbaren Gummimaterial, wie einem Naturkautschuk, einem Elastomermaterial oder dergleichen, mit mehreren Durchgangskanälen (5, 5a, 5b) zum Aufnehmen je eines Mikrorohres (21, 22);
wobei die Durchgangskanäle (5, 5a, 5b) jeweils eine Rohrdichtungsvorrichtung zum Abdichten einer Rohraußenseite (25, 26) des Mikrorohres (21, 22) gegenüber einer Rohraufnahme-Innenseite (51, 53) des Durchgangskanals (5, 5a, 5b) aufweisen;
wobei die Durchgangskanäle (5, 5a, 5b) jeweils eine Glasfaserkabeldichtungsvorrichtung zum Abdichten eines innerhalb eines Mikrorohres (21, 22) geführten und daraus hervorragenden Glasfaserkabels (23, 24) gegenüber einer Kabelaufnahme-Innenseite (61, 63, 65) des Durchgangskanals (5) aufweisen; und
wobei der Tragkörper (3), die Rohrdichtungsvorrichtungen und die Glasfaserkabeldichtungsvorrichtungen einstückig gefertigt, insbesondere vulkanisiert, sind;
wobei der Tragkörper koaxial in Verlängerung zu je einem Durchgangskanal (5, 5a, 5b) je eine einstückig mit dem Tragkörper gefertigte Noppe (7, 7a, 7b, 8, 8a, 8b) aufweist;
und wobei sich der jeweilige Durchgangskanal in die jeweilige Noppe hinein erstreckt und in der jeweiligen Noppe im Montagezustand sackgassenartig, insbesondere sacklochartig, endet.

2. Einrichtung nach Anspruch 1, wobei die Noppe (7, 8) in einem Montageausgangszustand den Durchgangskanal (5) fluiddicht abschließt und/oder wobei hinausragende Abschnitte der Noppe einzeln oder zu mehreren abschneidbar oder abreissbar sind, um eine Verteilerkasten-innenseitige Öffnung des Durchgangskanals zu realisieren.

3. Einrichtung nach Anspruch 1 oder 2, wobei die Noppe (7, 7a, 7b, 8, 8a, 8b) die Kabelaufnahme-Innenseite (61, 63, 65) ausbildet, die in einem Mikrorohr-Abdichtzustand mit dem Glasfaserkabel (23, 24) eines den Durchgangskanal (5, 5a, 5b) belegenden Mikrorohres (21, 22) derart belegbar ist, dass zumindest ein Abschnitt, wie ein Noppenhals (75, 85), ein Noppenrumpf (73, 83) oder ein Noppenfuß (71, 81), der Noppe (7, 8) die Kabeldichtungsvorrichtung realisiert.

4. Einrichtung nach einem der Ansprüche 1 bis 3, wobei die Noppe (8, 8a, 8b) in zumindest einem Abschnitt, insbesondere einen Halteabschnitt (80), wie ein Noppenhals (85), ein Noppenrumpf (83) oder ein Noppenfuß (81), eine Umfangsweite, insbesondere einen Außendurchmesser, aufweist, der wenigstens so groß ist wie, vorzugsweise größer ist als, eine lichte Weite, insbesondere ein Innendurchmesser, der Rohraufnahme-Innenseite (51, 53) des Durchgangskanals (5, 5a, 5b) und/oder wobei die Noppe (8, 8a, 8b) in zumindest einem Abschnitt, insbesondere einen Halteabschnitt (80), wie ein Noppenhals (85), ein Noppenrumpf (83) oder ein Noppenfuß (81), dazu ausgestaltet ist, von einem, insbesondere ortsfest mit dem Glasfaserverteilerkasten (100) verbundenen, Halteglied insbesondere zum Halten eines Mikrorohres (21, 22), wie eine Ringklemme, eine Manschette, eine Muffe, eine Klemmhülse oder dergleichen, unter Ausbildung einer radialen Klemm- oder Pressverbindung aufgenommen zu werden, wobei insbesondere die Noppe (8, 8a, 8b) in dem von dem Halteglied aufzunehmenden Abschnitt (80) derart bemessen ist, dass das Ausbilden der Klemm- oder Pressverbindung einen vorzugsweise abdichtenden radialen Klemmeingriff der Kabelaufnahme-Innenseite (61, 63, 65) des Durchgangskanals (5) gegenüber einem aus einem Mikrorohr (21, 22) hervorragenden Glasfaserkabel (23, 24) bewirkt.

5. Einrichtung nach einem der vorstehenden Ansprüche, wobei wenigstens einer, vorzugsweise jeder Durchgangskanal (5, 5a, 5b), der mehreren Durchgangskanäle eine sich in Richtung in den Glasfaserverteilerkasten (100) hinein insbesondere kontinuierlich verjüngende, vorzugsweise zumindest abschnittsweise konische und/oder gestufte, Innenkontur aufweist.

6. Einrichtung nach Anspruch 5, wobei wenigstens einer, vorzugsweise jeder Durchgangskanal (5, 5a, 5b), der mehreren Durchgangskanäle eine Innenkontur mit wenigstens einem Innenabsatz (52, 54) zum Bereitstellen eines axialen Endanschlags für das den Durchgangskanal (5) belegende Mikrorohr aufweist und/oder wobei jeder Durchgangskanal wenigstens zwei unterschiedlich große, vorzugsweise im Wesentlichen zylindrische Öffnungsquerschnitte (d₅₁, d₅₃) aufweist, sodass ein mit einem Glasfaserkabel (23, 24) belegtes Mikrorohr (21, 22) ausschließlich durch vorzugsweise translatorisches Einschieben in Axialrichtung (A) in den Durchgangskanal (5, 5a, 5b) einsetzbar ist.

7. Einrichtung nach Anspruch 5 oder 6, wobei wenigstens einer, vorzugsweise jeder Durchgangskanal (5, 5a, 5b), der mehreren Durchgangskanäle wenigstens einen Rohraufnahmeabschnitt (151, 153) mit der Rohraufnahme-Innenseite (51, 53) und wenigstens einen Kabelaufnahmeabschnitt (161, 163, 165) mit der Kabelaufnahme-Innenseite (61, 63, 65) aufweist, wobei der Kabelaufnahmeabschnitt (161, 163, 165) eine kleinere lichte Weite, insbesondere einen kleineren Innendurchmesser (d₆₁, d₆₃, d₆₅), als der Rohraufnahmeabschnitt aufweist.

8. Einrichtung nach einem der Ansprüche 5 bis 7, wobei wenigstens einer, vorzugsweise jeder Durchgangskanal (5, 5a, 5b), der mehreren Durchgangskanäle wenigstens zwei Rohraufnahmeabschnitte (151, 153) mit je einer Rohraufnahme-Innenseiten (51, 53) zum abdichtenden Aufnehmen unterschiedlich großer Mikrorohre (23, 24), mit unterschiedlichen lichten Weiten, insbesondere Innendurchmessern (d₅₁, d₅₃), aufweist und/oder wobei wenigstens einer, vorzugsweise jeder Durchgangskanal (5), der mehreren Durchgangskanäle wenigstens zwei Kabelaufnahmeabschnitte (161, 163, 165) mit je einer Kabelaufnahme-Innenseite (61, 63, 65) zum abdichtenden Aufnehmen unterschiedlich großer oder unterschiedlich vieler Glasfaserkabel (23, 24), mit unterschiedlichen lichten Weiten, insbesondere Innendurchmessern (d₆₁, d₆₃, d₆₅), aufweist.

9. Einrichtung nach einem der vorstehenden Ansprüche, wobei wenigstens einer, vorzugsweise jeder Durchgangskanal (5, 5a, 5b), der mehreren Durchgangskanäle, vorzugsweise an der Rohraufnahme-Innenseite (51, 53), eine Rückhaltevorrichtung aufweist, die bei Betätigung des Mikrorohres (21, 22) in Zugrichtung aus dem Durchgangskanal (5, 5a, 5b) heraus insbesondere widerhakend eine Rückhaltekraft auf das Mikrorohr (21, 22) ausübt, wobei insbesondere der Durchgangskanal, vorzugsweise an der Rohraufnahme-Innenseite, insbesondere mit einem sägegezahnten Innenprofil, gerippt (55, 57) ist.

10. Einrichtung nach einem der vorstehenden Ansprüche, wobei die mehreren Durchgangskanäle (5, 5a, 5b), insbesondere der Tragkörper (3), vorzugsweise die gesamte die Einrichtung, frei von Feststelleinrichtungen aus Metall ist, die bei Betätigung des Mikrorohres in Zugrichtung aus dem Durchgangskanal heraus insbesondere widerhakend eine Rückhaltekraft auf das Mikrorohr ausüben, insbesondere frei von jeglichen Metalleinsätzen.

11. Einrichtung nach einem der vorstehenden Ansprüche, wobei eine Seite (32, 34) des Tragkörpers (3) mit einem vorzugsweise rechteckigen, insbesondere quadratischen, Montageprofil zum translatorischen Einschieben des Tragkörpers längs einer entsprechend geformten Wandöffnung (101) des Glasfaserverteilerkastens (100) geformt ist, wobei insbesondere die Seite (32, 34) eine Führungsnut (38) aufweist, in die ein Wandrand (103) des Glasfaserverteilerkastens (100) gleitend eingreifen kann, und/oder das Montageprofil eine Montageeinschieberichtung des Tragkörpers (3) gegenüber dem Glasfaserverteilerkasten (100) derart festlegt, dass die Montageeinschieberichtung quer, insbesondere senkrecht, zur Durchgangskanallängsrichtung liegt.

12. Einrichtung nach einem der vorstehenden Ansprüche und wenigstens ein Mikrorohr (21, 22) oder mehrere getrennte Mikrorohre (21, 22), wobei ein Mikrorohr (21, 22) jeweils ein oder mehrere Glasfaserkabel (23, 24) ummantelt, wobei insbesondere eine Kabelaufnahme-Innenseite (61, 63, 65) wenigstens eines Durchgangskanals (5, 5a, 5b) vorzugsweise vollumfänglich ein den Durchgangskanal (5, 5a, 5b) belegendes Glasfaserkabel (23, 24) umgreift.

13. Glasfaserverteilerkasten (100) mit einem geschlossenen Gehäuse insbesondere aus Kunststoff und wenigstens einem in einer Gehäusewand angeordneten Durchgang (101), in dem eine nach einem der vorstehenden Ansprüche ausgebildete Einrichtung vorzugsweise lösbar eingesetzt ist.

14. Glasfaserverteilerkasten (100) nach Anspruch 13, wobei sämtliche Glasfaserkabelzugänge zu dem Glasfaserverteilerkasten als die Durchgangskanäle (5, 5a, 5b) in dem Tragkörper (3) realisiert sind, wobei insbesondere der Glasfaserverteilerkasten (100) nur einen in der Gehäusewand angeordneten Durchgang (101) aufweist, die mit einer einzigen Einrichtung belegt ist, sodass alle Durchgangskanäle für einen Durchgang in den Glasfaserverteilerkasten (100) in einem einzelnen Montageschritt an den Glasfaserverteilerkasten (100) anbringbar sind.

## Claims

1. Device for connecting, in particular fluid-tight, a plurality of microducts (21, 22) to a glass fiber distribution box (100), comprising:
a support body (3) made of an elastically deformable rubber material, such as a natural rubber, an elastomeric material or the like, having a plurality of passage channels (5, 5a, 5b) for receiving one microduct (21, 22) each;
wherein the passage channels (5, 5a, 5b) each have a tube sealing means for sealing a tube outer side (25, 26) of the microduct (21, 22) with respect to a tube reception inner side (51, 53) of the passage channel (5, 5a, 5b);
wherein said passage channels (5, 5a, 5b) each have an glass fiber cable sealing device for sealing an glass fiber cable (23, 24) guided within and protruding from a microduct (21, 22) against a cable reception inner side (61, 63, 65) of said passage channel (5); and
wherein the support body (3), the tube sealing devices and the glass fiber cable sealing devices are manufactured in one piece, in particular vulcanized;
wherein the support body has, coaxially in extension of a respective passage channel (5, 5a, 5b), a respective nub (7, 7a, 7b, 8, 8a, 8b) manufactured in one piece with the support body;
and wherein the respective passage channel extends into the respective nub and ends in the respective nub in the assembled state in the manner of a dead end, in particular in the manner of a blind hole.

2. Device according to claim 1, wherein the nub (7, 8) closes the passage channel (5) in a fluid-tight manner in an assembly initial state and/or wherein projecting sections of the nub can be cut off or torn off individually or as a plurality in order to realize a distribution box inner-sided opening of the passage channel.

3. Device according to claim 1 or 2, wherein the nub (7, 7a, 7b, 8, 8a, 8b) forms the cable reception inner side (61, 63, 65) which in a microduct sealing state is occupiable with the glass fiber cable (23, 24) of a microduct (5, 5a, 5b) occupying the passage channel (5, 5a, 5b) in such a way that at least a portion, such as a nub neck (75, 85), a nub body (73, 83) or a nub foot (71, 81), of the nub (7, 8) realizes the cable sealing device.

4. Device according to one of claims 1 to 3, wherein the nub (8, 8a, 8b) has in at least one section, in particular a holding section (80), such as a nub neck (85), a nub body (83) or a nub foot (81), a circumferential width, in particular an outer diameter, which is at least as large as, preferably larger than, a clear width, in particular an inner diameter, of the tube reception inner side (51, 53) of the passage channel (5, 5a, 5b) and/or wherein the nub (8, 8a, 8b) in at least one section, in particular a holding section (80), such as a nub neck (85), a nub body (83) or a nub foot (81), is designed to be received by a holding member being particularly fixedly connected to the glass fiber distribution box, in particular for holding a microtube (21, 22), such as a ring clamp, sleeve, fitting, clamping sleeve or the like, forming a radial clamping or press connection, wherein in particular the nub (8, 8a, 8b) in the section (80) to be received by the holding member is dimensioned in such a way that the formation of the clamping or press connection effects a preferably sealing radial clamping engagement of the cable reception inner side (61, 63, 65) of the passage channel (5) with respect to an glass fiber cable (23, 24) projecting from a microduct (21, 22).

5. Device according to any one of the preceding claims, wherein at least one, preferably each, passage channel (5, 5a, 5b) of the plurality of passage channels has an inner contour which projects in the direction of the distribution box, in particular continuously tapering, preferably conical and/or stepped at least in sections.

6. Device according to claim 5, wherein at least one, preferably each, passage channel (5, 5a, 5b) of the plurality of passage channels has an inner contour with at least one inner shoulder (52, 54) for providing an axial end stop for the microduct occupying the passage channel (5) and/or wherein each passage channel has at least two differently sized, preferably essentially cylindrical opening cross sections (d₅₁, d₅₃), so that a microduct (21, 22) occupied by a glass fiber cable (23, 24) can be introduced into the passage channel (5, 5a, 5b) exclusively by preferably translatory insertion in the axial direction (A).

7. Device according to claim 5 or 6, wherein at least one, preferably each, passage channel (5, 5a, 5b) of the plurality of passage channels comprises at least one tube reception portion (151, 153) having the tube reception inner side (51, 53) and at least one cable reception portion (161, 163, 165) having the cable reception inner side (61, 63, 65), wherein the cable reception section (161, 163, 165) has a smaller clear width, in particular a smaller inner diameter (d₆₁, d₆₃, d₆₅), than the tube reception section.

8. Device according to one of claims 5 to 7, wherein at least one, preferably each, passage channel (5, 5a, 5b) of the plurality of passage channels has at least two tube reception sections (151, 153), each having a tube reception inner side (51, 53) for sealingly receiving microducts (23, 24) of different sizes, having different clear widths, in particular inner diameters (d₅₁, d₅₃), and/or wherein at least one, preferably each passage channel (5), of the plurality of passage channels has at least two cable reception sections (161, 163, 165) each with a cable reception inner side (61, 63, 65) for sealingly receiving glass fiber cables (23, 24) of different sizes or different numbers, with different clear widths, in particular inner diameters (d₆₁, d₆₃, d₆₅).

9. Device according to one of the preceding claims, wherein at least one, preferably each, passage channel (5, 5a, 5b) of the plurality of passage channels has, preferably on the tube reception inner side (51, 53), a retaining device which, when the microduct (21, 22) is actuated in the pulling direction out of the passage channel (5, 5a, 5b), exerts a retaining force on the microduct, (21, 22) in particular in a barbed manner, wherein in particular the passage channel is ribbed (55, 57), preferably on the tube reception inner side, in particular with a saw-toothed inner profile.

10. Device according to one of the preceding claims, wherein the plurality of passage channels (5, 5a, 5b), in particular the support body (3), preferably the entire device, is free of locking devices made of metal, which exert a retaining force on the microduct when the microduct is actuated in the pulling direction out of the passage channel, in particular in a barbed manner, in particular free of any metal inserts.

11. Device according to one of the preceding claims, wherein one side (32, 34) of the support body (3) is shaped with a preferably rectangular, in particular square, mounting profile for translational insertion of the supporting body along a correspondingly shaped wall opening (101) of the glass fiber distribution box (100), wherein in particular the side (32, 34) has a guide groove (38) in which a wall edge (103) of the glass fiber distribution box (100) can slidingly engage, and/or the mounting profile defines a mounting insertion direction of the support body (3) relative to the glass fiber distribution box (100) in such a way that the mounting insertion direction lies transversely, in particular perpendicularly, to the passage channel longitudinal direction.

12. Device according to one of the preceding claims and at least one microduct (21, 22) or a plurality of separate microducts (21, 22), wherein a microduct (21, 22) sheathes in each case one or more optical fiber cables (23, 24), wherein in particular a cable reception inner side (61, 63, 65) of at least one passage channel (5, 5a, 5b) preferably fully encompasses a glass fiber cable (23, 24) occupying the passage channel (5, 5a, 5b).

13. Glass fiber distribution box (100) having a closed housing, in particular made of plastic, and at least one passage (101) which is arranged in a housing wall and in which a device formed according to one of the preceding claims is preferably releasably inserted.

14. Glass fiber distribution box (100) according to claim 13 with, wherein all optical fiber cable accesses to the optical fiber distribution box are realized as the passage channels (5, 5a, 5b) in a support body (3), wherein in particular the glass fiber distribution box (100) has only one passage (101) arranged in the housing wall, which is occupied by a single device, so that all passage channels for a passage into the glass fiber distribution box (100) can be attached to the optical fiber distribution box (100) in a single assembly step.

## Revendications

1. Système, destiné à raccorder, notamment de manière étanche au fluide plusieurs microtubes (21, 22) sur une boîte de distribution de la fibre optique (100), comprenant :
un élément de support (3) en une matière caoutchouteuse élastiquement déformable, telle qu'un caoutchouc naturel, une matière élastomère ou similaires, pourvue de plusieurs canaux de passage (5, 5a, 5b), destinés à recevoir chacun un microtube (21, 22);
les canaux de passage (5, 5a, 5b) comportant chacun un dispositif d'étanchéité de tube, destiné à assurer l'étanchéité d'une face extérieure de tube (25, 26) du microtube (21, 22) par rapport à une face intérieure de logement de tube (51, 53) du canal de passage (5, 5a, 5b) ;
les canaux de passage (5, 5a, 5b) comportant chacun un dispositif d'étanchéité de câble de fibre optique, destiné à assurer l'étanchéité d'un câble de fibre optique (23, 24) tiré à l'intérieur d'un microtube (21, 22) et saillant à partir de celui-ci par rapport à une face intérieure de logement de câble (61, 63, 65) du canal de passage (5) ; et
l'élément de support (3), les dispositifs d'étanchéité de tube et les dispositifs d'étanchéité de câble de fibre optique étant fabriqués en monobloc, notamment vulcanisés ;
l'élément de support comportant de manière coaxiale, dans le prolongement de chaque fois un canal de passage (5, 5a, 5b) chaque fois un téton (7, 7a, 7b, 8, 8a, 8b) fabriqué en monobloc avec l'élément de support ;
et le canal de passage respectif s'étendant à l'intérieur du téton respectif et en position de montage, se terminant dans le téton respectif, en forme d'impasse, notamment en forme de trou borgne.

2. Système selon la revendication 1, dans une position initiale de montage, le téton (7, 8) terminant le canal de passage (5) de manière étanche au fluide et/ou des segments saillant vers l'extérieur du téton étant raccourcissables ou déchirables individuellement ou à plusieurs, pour réaliser un orifice sur la face intérieure de la boîte de distribution du canal de passage.

3. Système selon la revendication 1ou 2, le téton (7, 7a, 7b, 8, 8a, 8b) formant la face intérieure du logement de câble (61, 63, 65), qui dans une position d'étanchéité du microtube peut être équipée du câble de fibre optique (23, 24) d'un microtube (21, 22) équipant le canal de passage (5, 5a, 5b), de telle sorte qu'au moins un segment, tel qu'un col de téton (75, 85), un tronc de téton (73, 83) ou un pied de téton (71, 81) du téton (7, 8) réalise le dispositif d'étanchéité du câble.

4. Système selon l'une quelconque des revendications 1à 3, le téton (8, 8a, 8b) comportant dans au moins un segment, notamment un segment de retenue (80), tel qu'un col de téton (85), un tronc de téton (83) ou un pied de téton (81) une face périphérique, notamment un diamètre extérieur qui est au moins aussi grand, de préférence plus grand qu'une lumière, notamment un diamètre intérieur de la face intérieure de logement de tube (51, 53) du canal de passage (5, 5a, 5b) et/ou dans au moins un segment, notamment un segment de retenue (80), tel qu'un col de téton (85), un tronc de téton (83) ou un pied de téton (81), le téton (8, 8a, 8b) étant conçu de sorte à être réceptionné par un élément de retenue, assemblé notamment de manière stationnaire avec le boîte de distribution de la fibre optique (100), destiné notamment à retenir un microtube (21, 22), tel qu'une pince annulaire, une manchette, un manchon, une douille de serrage ou similaires en créant un assemblage par serrage ou par pressage radial, dans le segment (80) destiné à être réceptionné par l'élément de retenue, notamment le téton (8, 8a, 8b) étant dimensionné de telle sorte que la création de l'assemblage par serrage ou par pressage provoque un engagement par serrage radial, assurant de préférence l'étanchéité de la face intérieure de logement de câble (61, 63, 65) du canal de passage (5) par rapport à un câble de fibre optique (23, 24) saillant hors du microtube (21, 22).

5. Système selon l'une quelconque des revendications précédentes, au moins un, de préférence chaque canal de passage (5, 5a, 5b) parmi les plusieurs canaux de passage comportant un contour intérieur s'étendant dans la direction de l'intérieur de la boîte de distribution de la fibre optique (100), se rétrécissant notamment en continu, de préférence au moins de forme conique et/ou échelonnée par endroits.

6. Système selon la revendication 5, au moins un, de préférence chaque canal de passage (5, 5a, 5b) parmi les plusieurs canaux de passage comportant un contour intérieur pourvu d'au moins un talon interne (52, 54) pour la mise à disposition d'une butée d'extrémité axiale pour le microtube équipant le canal de passage (5) et/ou chaque canal de passage comportant au moins deux sections transversales d'ouverture (d₅₁, d₅₃) de taille différente, de préférence de forme sensiblement cylindrique, de telle sorte qu'un microtube (21, 22) équipé d'un câble de fibre optique (23, 24) soit insérable exclusivement par un emboîtement de préférence par translation en direction axiale (A) dans le canal de passage (5, 5a, 5b).

7. Système selon la revendication 5 ou 6, au moins un, de préférence chaque canal de passage (5, 5a, 5b) parmi les plusieurs canaux de passage comportant au moins un segment de logement de tube (151, 153) pourvu de la face intérieure de logement de tube (51, 53) et au moins un segment de logement de câble (161, 163, 165) pourvu de la face intérieure de logement de câble (61, 63, 65), le segment de logement de câble (161, 163, 165) présentant une lumière plus petite, notamment un diamètre intérieur (d61, d63, d65) plus petit que le segment de logement de tube.

8. Système selon l'une quelconque des revendications 5 à 7, au moins un, de préférence chaque canal de passage (5, 5a, 5b) parmi les plusieurs canaux de passage comportant au moins deux segments de logement de tube (151, 153) pourvus chacun d'une face intérieure de logement de tube (51, 53), destinée à recevoir de manière à en assurer l'étanchéité des microtubes (23, 24) de différentes tailles, présentant différentes lumières, notamment différents diamètres intérieurs (d₅₁, d₅₃), et/ou au moins un, de préférence chaque canal de passage (5) parmi les plusieurs canaux de passage comportant au moins deux segments de logement de câble (161, 163, 165) pourvus chacun d'une face intérieure de logement de câble (61, 63, 65), destinée à recevoir de manière à en assurer l'étanchéité des câbles de fibre optique (23, 24) de différentes tailles ou en différentes quantités, présentant différentes lumières, notamment différents diamètres intérieurs (d₆₁, d₆₃, d₆₅).

9. Système selon l'une quelconque des revendications précédentes, au moins un, de préférence chaque canal de passage (5, 5a, 5b) parmi les plusieurs canaux de passage comportant de préférence sur la face intérieure de logement de tube (51, 53) un dispositif de retenue, qui lors de l'actionnement du microtube (21, 22) exerce dans la direction de traction hors du canal de passage (5, 5a, 5b) une force de retenue, notamment à la manière d'un crochet sur le microtube (21, 22), notamment le canal de passage étant nervuré (55, 57), de préférence sur la face intérieure de logement de tube, notamment avec un profilé intérieur en dents de scie.

10. Système selon l'une quelconque des revendications précédentes, les plusieurs canaux de passage (5, 5a, 5b), notamment l'élément de support (3), notamment l'ensemble du système étant exempts de systèmes d'immobilisation métalliques, qui lors de l'actionnement du microtube dans la direction de traction hors du canal de passage exercent une force de retenue, notamment à la manière d'un crochet sur le microtube, notamment exempts du moindre insert métallique.

11. Système selon l'une quelconque des revendications précédentes, une face (32, 34) de l'élément de support (3) étant façonnée avec un profilé de montage de préférence rectangulaire, notamment parallélépipédique, destiné à l'emboîtement par translation de l'élément de support le long d'un orifice de paroi (101) façonné en conséquence de la boîte de distribution de la fibre optique (100), notamment la face (32, 34) comportant une rainure de guidage (38) dans laquelle un bord de paroi (103) de la boîte de distribution de la fibre optique (100) peut s'engager par glissement, et/ou le profilé de montage immobilisant une direction d'emboîtement de montage de l'élément de support (3) par rapport à la boîte de distribution de la fibre optique (100), de telle sorte que la direction d'emboîtement de montage se situe à la transversale, notamment à la perpendiculaire de la direction longitudinale du canal de passage.

12. Système selon l'une quelconque des revendications précédentes et au moins un microtube (21, 22) ou plusieurs microtubes (21, 22) séparés, un microtube (21, 22) enveloppant respectivement un ou plusieurs câbles de fibre optique (23, 24), notamment une face intérieure de logement de câble (61, 63, 65) d'au moins un canal de passage (5, 5a, 5b) entourant de préférence sur toute sa périphérie un câble de fibre optique (23, 24) équipant le canal de passage (5, 5a, 5b).

13. Boîte de distribution de la fibre optique (100) pourvu d'un boîtier fermé, notamment en matière plastique et d'au moins un passage (101) placé dans une paroi du boîtier, dans lequel est inséré de préférence de manière amovible un système conçu selon l'une quelconque des revendications précédentes.

14. Accès de câble de fibre optique (100) selon la revendication 13, vers la boîte de distribution de la fibre optique, réalisés sous la forme des canaux de passage (5, 5a, 5b) dans l'élément de support (3), notamment la boîte de distribution de la fibre optique (100) ne comportant qu'un seul passage (101) placé dans la paroi du boîtier, qui est équipé d'un seul système, de telle sorte que pour un passage dans la boîte de distribution de la fibre optique (100), tous les canaux de passage puissent être montés en une seule étape de montage sur la boîte de distribution de la fibre optique (100).
